# EUROPEAN PATENT SPECIFICATION

(11) **EP 1 855 489 B1**
(45) Date of publication and mention of the grant of the patent: **23.02.2011**
(21) Application number: 05812534.5
(22) Date of filing: 28.11.2005
(51) Int. Cl.: H04W 4/08

(54) **METHOD AND SYSTEM OF ACQUIRING LISTENER MS INFORMATION AT NETWORK SIDE DURING VGCS/VBS PROCEDURE**
VERFAHREN UND SYSTEM ZUM BEZUG VON NETZSEITIGER INFORMATION EINER HÖRENDEN MOBILSTATION WÄHREND EINES VGCS/VBS-VERFAHRENS
PROCEDE ET SYSTEME D'ACQUISITION D'INFORMATIONS DE STATION MOBILE (MS) D'ECOUTE SUR UN RESEAU AU COURS D'UNE PROCEDURE VGCS/VBS

(30) Priority: 07.12.2004 CN 200410097137; 07.12.2004 CN 200410097136
(43) Date of publication of application: 14.11.2007
(73) Proprietor: Huawei Technologies Co., Ltd., Longgang District, Shenzhen Guangdong 518129 (CN)
(72) Inventor: XIA, Zhili, Huawei Administration Building, Shenzhen, Guangdong 518129 (CN)
(74) Representative: Sachseder, Matthias
(86) International application number: PCT/CN2005/002032
(87) International publication number: WO 2006/060947

(56) References cited:
- WO-A-00/30375
- WO-A-03/003592
- CN-A- 1 261 243
- CN-A- 1 476 259
- DE-U1- 9 413 749
- "Digital cellular telecommunications system (Phase 2+); Voice Group Call Service (VGCS); Stage 2 (3GPP TS 43.068 version 5.4.0 Release 5); ETSI TS 143 068" ETSI STANDARDS, EUROPEAN TELECOMMUNICATIONS STANDARDS INSTITUTE, SOPHIA-ANTIPO, FR, vol. 3-CN1, no. V540, September 2004 (2004-09), pages 1-76, XP014017667 ISSN: 0000-0001

## Description

### Field of the Invention

The present invention relates to a trunking communication system based on a public communication system, and particularly, to method and system for obtaining information of a listener mobile station during a group call/multicast process in the trunking communication system.

### Background of the Invention

As an economical and flexible commanding and scheduling communication system recently developed, the trunking communication system is widely used in such as government agencies, energy source and transportation units, airports and docks, industrial and mining enterprises, fire and police stations, water conservancy and military units, to meet the demands of various units for intercommunications.

The trunking communication system, at the beginning, is networked in the trunking dedicated network manner. However, the technologies and modes among groups are various, and each group constructs a trunking dedicated network respectively, which easily forms the situation that each group constructs network in their own way, and leads to such drawbacks as low using efficiency of frequencies, high network construction cost and high network maintenance cost. At present, along with the shift from analog to digital in the digital trunking communication technology, the construction of the digital trunking network shows a tendency of moving from standalone dedicated network construction to public trunking network construction. Especially, the Global System for Mobile communications (GSM) has been developed to be perfect and has a wide public network basis across countries in the world. Therefore, the development of trunking communication system based on the GSM communication network has been paid much attention in the industry.

Presently, the Europe has customized a suit of international standard for railway mobile communication, GSM-R, which uses the GSM communication network to bear services, so as to implement trunking communication services such as the basic Voice Group Call Service (VGCS)/the Voice Broadcast Service (VBS), and a basic voice scheduling call function. The group call is a call, in which multiple mobile stations participate at the same time and in which a speaker mobile station may receive and send information, a listener mobile station may only receive information and the speaker mobile station may be changed. The multicast is a special group call in which the speaker mobile station cannot be changed.

However, the demands on services are different since the subscriber group of a public network is different from that of a dedicated trunking network. The GSM communication network mainly faces the public previously, and the related services are used to serve the public, and can not meet some special demands of a trunking communication system yet.

In the group call/multicast process in the existing GSM-R system, one speaker mobile station and multiple listener mobile stations are allowed at one time, wherein the number of the listener mobile stations is not limited. And there is a bi-directional signaling channel connection between the speaker mobile station and the network side, and the network side may obtain information of the speaker mobile station expediently; a listener mobile station operates in a receiving mode, and receives information borne by the downlink service channel of the group call/multicast in the group call/multicast process, and there is no uplink signaling connection between the listener mobile station and the⁻network side.

Thus, in the group call/multicast process in the GSM-R, the network side cannot obtain information of a listener mobile station, for example, the network side cannot know whether a listener mobile station participates in the group call/multicast and cannot know the process for a listener mobile station participating in the group call/multicast. Further, it is not favorable for a trunking section to schedule the communications between the mobile stations in the group when the group call/multicast is implemented, and it is impossible to check the on position state of each of the mobile stations in the group. The operating efficiency of the group call/multicast is low and cannot meet demands of a dedicated trunking section on the group call/multicast service.

TS 143 048 V5.4.0 discloses the stage two description of the Voice Group Call Service (VGCS) which allows speech conversation of a predefined group of service subscribers in half duplex mode on the radio link taking into account multiple subscribers involved in the group call per cell. In the descriptions of the TS 143 048 V5.4.0, normal operation with successful outcome, radio channels, notification procedures, overview of signalling and etc are disclosed.

### Summary of the Invention

Embodiments of the present invention provide method and system for obtaining information of listener mobile stations in a group call/multicast process in a trunking telecommunication system based on a public network, so that the information of the listener mobile station in the group call/multicast process can be obtained. By this way, it facilitates the commanding and scheduling in the trunking communication system.

According to embodiments of the present invention, a method for obtaining information of listener mobile stations in a group call/multicast process in a trunking communication system based on a public network includes the following processes:
designating a dedicated control channel in a multiframe sequence for listener mobile stations reporting information;
allocating a sub-channel in the dedicated control channel for a group call/multicast in response to the group call/multicast being established;
sending description information of the sub-channel allocated to the mobile stations in the group call/multicast;
determining, a position of the sub-channel in the dedicated control channel according to the description information of the sub-channel;
determining an access burst (AB) position in the sub-channel corresponding to a listener mobile station based on a mapping relationship between the listener mobile stations in the group call/multicast and AB positions in the sub-channel;
reporting an AB to a network side via the determined AB position; and
obtaining information of the listener mobile station based on the reported AB.

According to embodiments of the present invention, a trunking communication system includes:
a network side adapted to designate a dedicated control channel in a multiframe sequence for listener mobile stations reporting information, allocate a sub-channel available in the dedicated control channel for a group call/multicast established, send description information of the sub-channel allocated to the mobile stations in the group call/multicast, and obtain information of the listener mobile station based on an AB reported by the listener mobile station; and
at least one listener mobile station in the group call/multicast adapted to determine a position of the sub-channel in the dedicated control channel according to the description information of the sub-channel, determine an AB position in the sub-channel corresponding to a listener mobile station based on a mapping relationship between the listener mobile stations in the group call/multicast and AB positions in the sub-channel, and report an AB to the network side via the determined AB position.

The technical solutions of the above embodiments of the present invention have the following advantages.

Because a listener mobile station uses an AB to report information and one AB uses a very sort time, i.e. 0.577 ms in general, the time during which the listener mobile station leaves the group call/multicast channel when the listener mobile station reports information is very short and the reporting speed is high, and thus the normal communication of the listener mobile station is not influenced and the basic service of the group call/multicast is not influenced.

In the method of the embodiment of the present invention, the unlinking of the group call/multicast channel is not occupied, thus the communications between listener mobile stations and the network side are not influenced.

### Brief Description of the Drawings

Fig.1 shows a diagram illustrating the principle for the corresponding between the listener mobile stations in the group of the group call/multicast and the reporting positions of the ABs in the frame resource sub-channel in accordance with a first embodiment of the present invention.
Fig.2 shows a flow chart for the network side obtaining information of a listener mobile station in the group call/multicast process in a GSM-based trunking communication system in accordance with the first embodiment of the present invention.
Fig.3 shows a diagram illustrating the principle for the corresponding between the listener mobile stations in the group of the group call/multicast and the reporting positions of the ABs in the time slot sub-channel in accordance with a second embodiment of the present invention.
Fig.4 shows a flow chart for the network side obtaining the information of a listener mobile station in the group call/multicast process in a GSM-based trunking communication system in accordance with the second embodiment of the present invention.

### Detailed Description of the Invention

The embodiments of the present invention are hereinafter further described with reference to the drawings.

According to the embodiments of the present invention, the network side designates a dedicated control channel for the listener mobile stations in the group of the group call/multicast reporting information. The dedicated control channel is shared by all the mobile stations in a group and in which a sub-channel is allocated for the group call/multicast after a group call/multicast is established. In the sub-channel, each listener mobile station in the group call/multicast respectively reports an AB containing information of the listener mobile station at a different AB position, and the network side may obtain the information of each listener mobile station in the group call/multicast by parsing the reported AB. The AB position is a position where the AB is received.

The embodiments of the present invention are used during a group call/multicast process in a trunking radio communication system based on a public network, and the embodiments of the present invention are described by taking a trunking radio communication system based on a GSM public network as an example.

When a sub-channel is allocated in the dedicated control channel, the basic allocating unit may be a multiframe and the corresponding sub-channel is a frame resource sub-channel, or the basic allocating unit is a time slot and the corresponding sub-channel is a time slot sub-channel. The technique solutions of the embodiments of the present invention are hereinafter described with two detailed embodiments, respectively.

In a first embodiment of the present invention, a multiframe is used for the allocating unit and a frame resource sub-channel is allocated in the dedicated control channel for the established group call/multicast.

In the first embodiment, the SDCCH in the GSM communication system is designated as the dedicated control channel for the mobile stations during a group call/multicast reporting information and all the mobile stations in the group call/multicast share one SDCCH. The normal communications of the listener mobile stations are not influenced because no link is established in an SDCCH in advance. Listener mobile stations only need to report an AB at a fixed position, and thus the used time is very short, generally only several ms. Moreover, this embodiment is more useful to the listener mobile stations and the speaker mobile station may directly transfer information to the network side through the uplink.

In a GSM communication system, the SDCCH is a dedicated control channel and the mapped physical channel in the SDCCH is multiple time slots in multiframe. In the embodiments of the present invention, a multiframe is used for one unit of physical channel and the multiframe may be of different types. In this embodiment, a 2 × 51 multiframe is used for one unit of physical channel. Practically, a 4 × 51 multiframe or other multiframes may also be used for one unit of physical channel. There are 102 frames and 8 mapped SDCCHs in each 2 × 51 multiframe, each SDCCH is mapped into 12 time slots, and each of time slots occupies one AB accordingly. For a 4 x 51 multiframe, each SDCCH is mapped into 24 time slots, and each of time slots occupies one AB accordingly. The number of ABs occupied by a SDCCH in other types of multiframes may be inferred in the way above mentioned.

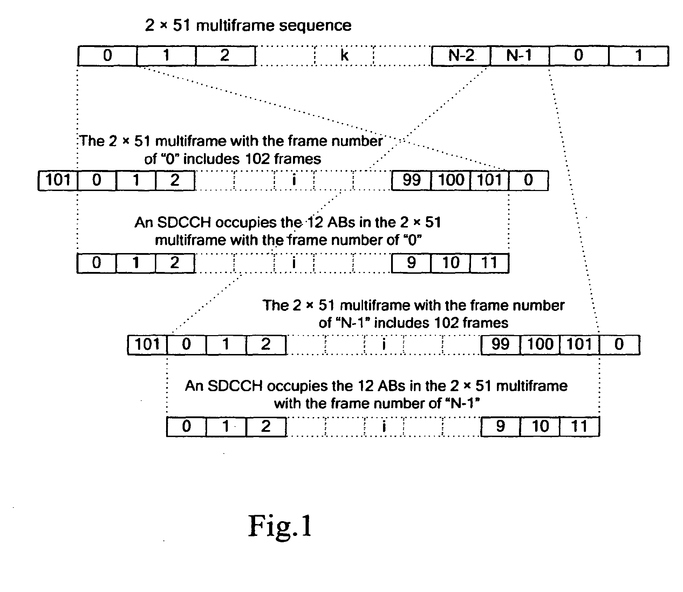

Fig.1 shows a diagram illustrating the principle for the corresponding between the listener mobile stations in the group of the group call/multicast and the reporting positions of the ABs in the frame resource sub-channel in accordance with the first embodiment of the present invention. As shown in Fig.1, the 2 × 51 multiframe sequence is sent in a circular manner. Each 2 × 51 multiframe includes 102 frames, for example, both the 2 × 51 multiframe with the frame number of "0" and the 2 × 51 multiframe with the frame number of "N- 1" include 102 frames. There are 8 mapped SDCCHs in each multiframe. However, only one of the 8 SDCCHs is shown in Fig.1 for the sake of describing clearly. In each 2 × 51 multiframe, each SDCCH occupies 12 ABs accordingly. For example, an SDCCH occupies the 12 ABs in the 2 × 51 multiframe with the frame number of "0", and likewise, another SDCCH occupies the 12 ABs in the 2 × 51 multiframe with the frame number of "N-1 ". In this embodiment, one or more SDCCHs in the 2 × 51 multiframe may be designated as dedicated information reporting channels of listener mobile station, and for one group call/multicast, only one SDCCH is designated as the information reporting channel of listener mobile station in the group call/multicast. The designated SDCCH is divided into sub-channels based on frame resource, and one sub-channel is allocated for one group call/multicast. The SDCCH is divided into multiple sub-channels based on frame resource, that is, the SDCCH is divided based on the unit in the 2 × 51 multiframe. The sub-channels obtained through the division are called Listcner_SDCCH frame resource sub-channels and called frame resource sub-channels in brief. In a single 2 × 51 multiframe, all the ABs occupied by a designated SDCCH are set as a basic frame resource unit, and the frame resource sub-channel is the combination of one or more basic frame resource units. For example, the ABs included by the designated SDCCH in the 2 51 multiframe with the frame number of "0" are a frame resource sub-channel, and the ABs included by the designated SDCCH in the 2 × 51 multiframe with the frame number of "0", the 2 × 51 multiframe with the frame number of "0", and the 2 × 51 multiframe with the frame number of "0" may also be a frame resource sub-channel.

The network side may allocate different frame resource sub-channels for different group call/multicast. Only one basic frame resource unit needs to be allocated as the frame resource sub-channel for a group call/multicast with the number of the mobile stations in the group less than 12; Integer[Maximum]D/12] basic frame resource units need to be allocated as the frame resource sub-channel for a group call/multicast with the number of the mobile stations in the group larger than 12, wherein MaximumID is the maximal subscriber number in the group, that is, the maximal number of the mobile stations in the group, and the subscriber number is orderly arranged from 1 and are 0, 1, 2......, MaximumID, respectively; Integer[MaximumID/12] denotes rounding up MaximumID/12, for example, Integer[3.3] = 4. The multiple basic frame resource units, which are used for the frame resource sub-channel, may be continuous or incontinuous, that is, the 2 x 51 multiframes where the multiple basic frame resource units are located may be continuous or incontinuous.

Because there may be multiple group call/multicast in the GSM at the same time, SDCCHs in multiple 2 × 51 multiframes need to be used to report state information of listener mobile stations. To meet such demand, in this embodiment, N2 × 51 multiframes are set based on the system operation situation and the system synthetically optimized performance in advance. N is a natural number, and the designated SDCCHs in the N 2 × 51 multiframes are specially used to report the information of the listener mobile stations. All the listener mobile stations in the group call/multicast circularly report their information by taking N multiples of 2 × 51 multiframe as the multiframe sequence period so as to enable the network side to obtain real time information of the listener mobile stations. Moreover, each of the listener mobile stations in all the group call/multicast corresponds to only one AB position in the designated SDCCH in the period of N 2 × 51 multiframes and the listener mobile station reports an AB at the corresponding AB position.

After allocating a frame resource sub-channel for the group call/multicast, the network side needs to send the description information of the frame resource sub-channel of listener mobile station in the SDCCH to the listener mobile station in the group call/multicast. In this embodiment, the describing method of the frame resource sub-channel in the SDCCH corresponding to a group call/multicast is described with the example in which some continuous 2 × 51 multiframes are allocated in the period of N 2 × 51 multiframes for a group call/multicast. The describing method of a frame resource sub-channel is Listener_SDCCH(SubFrame(K,L), N), wherein SubFrame denotes a sub-frame, that is, a frame resource sub-channel; K is the serial number of the start multiframe of the L continuous idle multiframes in a multiframe sequence period, and the value of K may be 0, 1, 2......, N—1, K + L < N, L = Integer[Maximumn)/12]. Listener_SDCCH(SubFrame(K,L), N) denotes that the designated SDCCH in the L idle 2 × 51 multiframes starting from the multiframe with the number of K in the period ofN 2 × 51 multiframes is the frame resource sub-channel corresponding to the current group call/multicast.

In the frame resource sub-channel, the AB positions orderly correspond to the intra-group numbers of the listener mobile stations one by one, and the mapping relationships are set in the system in advance. The mapping relationships may be set with the following method.

If the serial numbers of the N 2 × 51 multiframes are 0, 1, 2, 3......, N—1, respectively, and the intra-group number of a listener mobile station is ID, wherein the value thereof is less than 12 × L and the value range thereof is 0, 1, 2......, 12 × L— I, the AB position corresponding to the listener mobile station may be denoted as the serial number of the multiframe belonging to the AB, or the detailed position of the AB in the frame resource sub-channel in the multiframe belonging to the AB. The multiframe is a 2 × 51 multiframe, and the serial number of the multiframe belonging to the AB is obtained based on the formula: K+ Integer [ID/12], wherein Integer [ID/12] denotes rounding ID/12, for example, Integer [13/12] = 1, and Integer [ID/12] < L; the detailed position of the AB in the frame resource sub-channel in the multiframe belonging to the AB may be obtained based on the formula: Mode [ID/12], which denotes the Mode [ID/12]th AB position in the frame resource sub-channel in the current multiframe. Mode denotes extracting the mode of ID/12, for example, MODE [15/12] =3. The listener mobile station reports an AB at the AB position periodically and the period is N 2 × 51 multiframes. The reported AB may include the intra-group ID of the listener mobile station. Moreover, since an AB may include a space of 8 bits or 11 bits, in this embodiment, the AB with an 11 bit space is used, and 8 bits of the 11 bits are used to indicate the intra-group ID of the mobile station and the other 3 bits are used to indicate other information. Since the maximal binary number that may be denoted by 8 bits is 11111111, 256 ID numbers may be denoted farthest, if all the 8 bits are used to record the intra-group ID of a listener mobile station. Thus during a group call/multicast in which the number of the subscribers is larger than 256, the listener mobile station with the intra-group ID number larger than 256 can not be denoted. Therefore, in this embodiment, the intra-group ID of a listener mobile station is denoted as Mode [ID/256]. If 6 bits in an AB are used to record the intra-group ID of a listener mobile station, 64 ID numbers may be denoted farthest. Therefore, in this case, the intra-group ID of a listener mobile station carried in the AB may be denoted as MODE [ID/64].

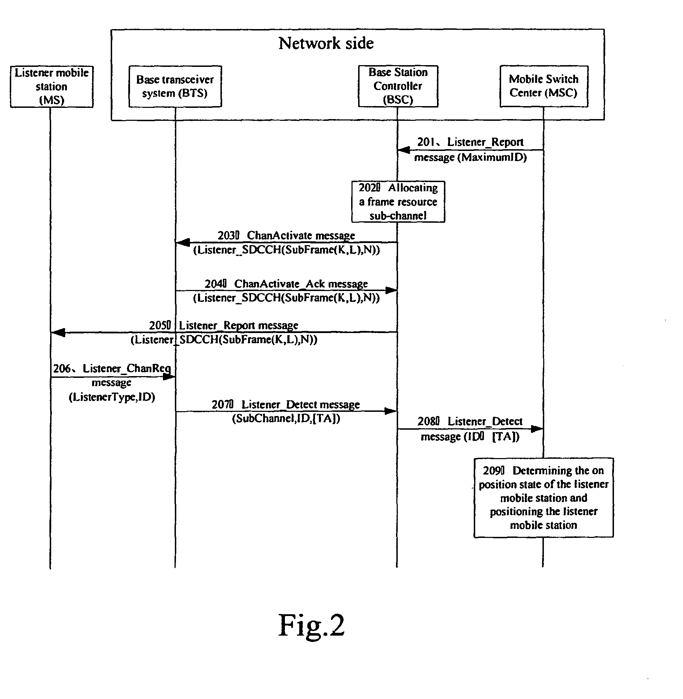

Fig.2 shows a flow chart for the network side obtaining information of a listener mobile station in the group call/multicast process in a GSM-based trunking communication system in accordance with a second embodiment of the present invention. As shown in Fig.2, the procedure mainly includes the followings.

Block 201: A Mobile Switch Center (MSC) sends a listener report (Listener_Report) message carrying the maximal intra-group subscriber number (MaximumlD) in the group call/multicast to the Base Station Controller (BSC) in the Base Station Subsystem (BSS) after a group call/multicast is established.

In block 202: the BSC receives the Listener_Report message, allocates an available idle frame resource sub-channel for the group call/multicast, based on the MaximumID in the message and the current using situation of the radio resources in the communication system, and stores the mapping relationship between the frame resource sub-channel and the group call/multicast.

The detailed allocation process includes the followings: firstly, obtaining the number of the basic frame resource units needed by the group call/multicast, L, with the formula: L = Integer[MaximumID/12]; then, verifying whether there are L continuous idle 2 × 51 multiframes in the period of N 2 × 51 multiframes set in advance, and if yes, allocating the L continuous idle 2 × 51 multiframes as the sub-channel for the current group call/multicast, if the number of the start multiframe of the L continuous 2 × 51 multiframes is K, and proceed to block 203; otherwise, terminate this process.

In block 203: the BSC sends a channel activate (ChanActivate) message containing description information of the frame resource sub-channel allocated by the BSC for the current group call/multicast and the number of the 2 × 51 multiframes in a period, N, to the base transceiver system (BTS). The description information of the frame resource sub-channel is Listener_SDCCH (SubFrame(K,L), N) denoting that the frame resource sub-channel allocated for the current group call/multicast is the designated SDCCH in the L continuous idle 2 × 51 multiframes starting from the Kth multiframe in the period ofN 2 × 51 multiframes set in advance.

In block 204: the BTS receives the ChanActivate message, verifies whether the frame resource sub-channel described in the message is valid, that is, verifies whether the resource of the described frame resource sub-channel is available, and if yes, the BTS activates the sub-channel and returns a successful channel activate response (ChanActivate_Ack) message carrying the description information of the activated frame resource sub-channel, Listener_SDCCH(SubFrame(K,L), N), to the BSC; otherwise, the BTS returns a failing ChanActivate_Ack message to the BSC.

How to verify whether the frame resource sub-channel is valid in the block is the existing common technology and will not be described in detail.

In block 205: the BSC receives the ChanActivate_Ack message, verifies, based on the ChanActivate_Ack message, whether the BTS has succeeded in activating the frame resource sub-channel allocated for the group call/multicast, and if yes, the BSC periodically sends a Listener_Report message carrying the description information of the frame resource sub-channel allocated for the current group call/multicast, Listener_SOCCH (SubFrame(K,L), N), to all the listener mobile stations in the group call/multicast through the downlink Fast Associated Control Channel (FACCH) of group call/multicast of each cell in the area of the current group call/multicast; otherwise, terminate this process.

The interval at which the BSC periodically sends the Listener_Report message in the block 205 is N multiples of 2 × 51 multiframes.

A listener mobile station in the current group call/multicast is in the group call/multicast channel listening state all along so as to receive information transferred by the network side, after a group call/multicast is established successfully, and the listener mobile station performs block 206 after receiving the Listener_Report message from the BSC.

In block 206: the listener mobile station obtains description information of the frame resource sub-channel in the Listener_Report message, Listener_SDCCH (SubFrame(K,L), N); determines the AB position corresponding to the listener mobile station in the frame resource sub-channel based on the above mapping relationship between the IDs of the listener mobile stations and the AB positions in the frame resource sub-channel set in advance, K, N and its intra-group ID, sends a listener report (Listener_ChanReq) message containing the intra-group ID of the listener mobile station and the access type (ListenerType) of the listener mobile station to the BTS by triggering an AB at the AB position. In this embodiment, the intra-group ID of a listener mobile station is denoted as Mode[ID/256], the ListenerType is identified with a distinguishing code indicating whether the AB is valid. If the AB is disturbed in the reporting process and the distinguishing code is changed as a result, the distinguishing code indicates that the AB is invalid, and otherwise the distinguishing code indicates that the AB is valid. The listener mobile station returns to the group call/multicast channel listening state at once after reporting a Listener_ChanReq message every time.

In the block 206, the detailed process for determining the AB position corresponding to the listener mobile station includes the followings: firstly, obtaining the sequence with the reporting period of N 2 × 51 multiframes and obtaining that the reporting channel is an SDCCH; then, obtaining the serial number of the 2 × 51 multiframe belonging to the AB position, E, based on the formula: K+ Integer [ID/12]; next, obtaining the number of the detailed position of AB in the frame resource sub-channel in the 2 × 51 multiframe, F, with the formula: Mode [ID/12]. Accordingly, the position of the AB corresponding to the current listener mobile station is the position of the Fth AB in the SDCCH in the Eth 2 × 51 multiframe in the N 2 × 51 multiframes set in advance.

A mobile station in the group call/multicast performs block 206 upon receiving a Listener_Report message, and thus the listener mobile station may periodically send a **Listener_ChanReq** message by the period of N multiples of 2 × 51 multiframe. In addition, in block 205, the BSC may issue a Listener_Report message to the listener mobile stations only once; and in block 206, the listener mobile station initially sends a Listener_ChanReq message to the network side periodically by the period of N multiples of 2 × 51 multiframe.

In block 207: the BTS receives the AB from the listener mobile station, parses the AB to obtain the contents of the Listener_ChanReq message, verifies whether the ListenerType is valid, and if yes, the BTS keeps on performing the process of the block 207, and otherwise, the BTS determines that the current AB is not the AB reported by the listener mobile station, and terminate this proceess.

The BTS determines the reporting position of the current AB, verifies, based on the mapping relationship between the intra-group IDs of listener mobile stations and the reporting positions of AB in the frame resource sub-channel set in the above method, whether the included intra-group ID of the listener mobile station corresponds to the actual reporting position of the current AB correctly, and if yes, the BTS sends a listener detect (Listener_Detect) message containing the description information of the frame resource sub-channel corresponding to the actual reporting position of the current AB, SubChannel, and the intra-group ID of the listener mobile station to the BSC; otherwise, the BTS determines that the current AB accesses the network side in a wrong way, and terminate this proceess.

In the block 207, the detailed process for verifying whether the intra-group ID of the listener mobile station included in the Listener_ChanReq message corresponds to the actual reporting position of the current AB correctly may include the followings:
firstly, obtaining the intra-group ID of the listener mobile station in the Listener_ChanReq message, and obtaining the reporting position of AB corresponding to the intra-group ID of the listener mobile station in the frame resource sub-channel with the formulas K+ Integer [ID/12] and Mode [ID/12], and if the obtained reporting position of AB is the same as the actual reporting position of the current AB, determining that the intra-group ID of the listener mobile station corresponds to the actual reporting position of the current AB; otherwise, determining that the intra-group ID of the listener mobile station does not correspond to the actual reporting position of the current AB.

The above detailed process for verifying whether the intra-group ID of the listener mobile station included in the Listener_ChanReq message corresponds to the actual reporting position of the current AB correctly may also include the followings:
firstly, obtaining the actual reporting position of the current AB which includes the serial number of the 2 × 51 multiframe where the current AB is located, and the detailed position of the current AB in the frame resource sub-channel in the 2 × 51 multiframe; then performing an inverse calculation based on the formulas, K+ Integer [ID/12] and Mode [ID/12], to obtain the intra-group ID of the listener mobile station, and performing the processing with the formula Mode[ID/256], comparing the obtained result with the intra-group ID of the listener mobile station included in the Listener_ChanReq message, and if the two are the same, determining that the intra-group ID of the listener mobile station corresponds to the actual reporting position of the current AB correctly; otherwise, determining that the intra-group ID of the listener mobile station does not correspond to the actual reporting position of the current AB.

In addition, in the block 207, the BTS may further calculate the value of the time advance (TA) of the ID from the site and contain the value of the TA in a Listener_Detect message. Considering that how to calculate the value of TA is an existing common technology, it will not be described in detail.

In block 208: the BSC receives the Listener Detect message from the BTS, searches for the group call/multicast corresponding to the sub-channel based on the description information of sub-channel in the Listener-Detect message, and reports a Listener_Detect message carrying the intra-group ID of the current listener mobile station and the value of TA to the MSC through the Signaling Connection Control Protocol (SCCP) connection corresponding to the listener reporting cell in the group call/multicast.

In block 209: the MSC receives the Listener_Detect message from the BSC, reads the intra-group ID of the listener mobile station and the value of TA contained in the Listener_Detect message, and performs commanding and scheduling based on the read data. For example, the corresponding cell identification (Cell ID) in the group call/multicast may be found based on the current SCCP connection, and thus it is determined that the listener mobile station identified by the intra-group ID of listener mobile station is in the on position state participating in the group call/multicast in the group call/multicast cell identified by the Cell ID; meanwhile, the MSC may further position the listener mobile station based on the Cell ID and the value of TA, and terminate this proceess.

For each listener mobile station, the process of blocks 205 to 209 occurs periodically and the length of the period is the multiframe sequence period, that is, N multiples of 2 × 51 multiframe.

In this embodiment, the above Listener_ChanReq message sent by a listener mobile station to the network side may also include other information indicating its states, such as the parameters of the process of the listener mobile station participating in the group call/multicast.

The network side in accordance with this embodiment may also obtain the information indicating whether the listener mobile station is on position based on the actual position where the listener mobile station reports an AB, that is, determining the intra-group ID of the listener mobile station having reported the AB on the position based on the above one-to-one mapping relationship between the listener mobile stations and the AB positions in the frame resource sub-channel, verifying whether the intra-group ID is valid, and if yes, determining that the listener mobile station corresponding to the intra-group ID is in the on position state, and otherwise, determining that the listener mobile station corresponding to the intra-group ID is not on position.

In addition, all the cells in the area of the group call/multicast perform the process shown in Fig.2.

Because in this embodiment of the present invention, each listener mobile station in the group may report its information periodically in the group call/multicast process in a trunking communication system, the network side may continually obtains the on position state of each listener mobile station in the group, that is, the network side may obtain whether the listener mobile station participates in the group call/multicast and obtain the condition that the listener mobile station participates in the group call/multicast process, which is favorable for a trunking section to schedule the communications and check the on position condition of each member in the group when the group call/multicast is implemented.

With the method of this embodiment of the present invention, a mobile station in the group state displaying service may be implemented, that is, the on position states of all the mobile stations participating in the group call/multicast may be displayed at the network side in real time. Moreover, the cell identification of each listener mobile station of the group call/multicast and the distance between the listener mobile station and the identification site may be determined at the same time.

In this embodiment, because a frame resource sub-channel is allocated by taking a multiframe as the basic frame resource unit, the reporting period of group call/multicast is a multiframe sequence period and the number of the multiframes in the frame sequence period may be set based on the system operation situation and the system synthetically optimized performance in advance, the reporting periods are relatively changeless no matter a group call/multicast with a large number of subscribers in the group or a group call/multicast with a small number of subscribers in the group, and thus the reporting performance of group call/multicast may be averaged and an extreme difference in the reporting performance will not be brought about because of the difference in the numbers of the subscribers in the groups.

The highest speed at which the states of all the subscribers in a group are refreshed may be achieved as 471 ms if the number of the members in the group of the group call/multicast is less than or equals to 12, because in this embodiment a frame resource sub-channel is allocated by taking a multiframe as the basic frame resource unit, a 2 × 51 multiframe may be used to attain the objective of the present invention and the period of the 2 × 51 multiframe is about 471 ms.

In this embodiment, because a frame resource sub-channel is allocated by taking a multiframe as the basic frame resource unit are especially useful in the case that the number of the subscribers in a group is less than 12, and in this case, only one multiframe period may be used to send the on position information of all the listener mobile stations in the group. Moreover, a standalone dedicated control channel may logically support arbitrary number of small scale group call/multicast and the only difference is that the refreshing period of each group call/multicast increases as the number of the supported group call/multicast increases.

In the second embodiment of the present invention, a time slot is used for the allocating unit and a time slot sub-channel is allocated in the designated dedicated control channel in the multiframe for the established group call/multicast.

In the second embodiment, the SDCCH in the GSM communication system is designated as the dedicated control channel for the mobile stations during a group call/multicast reporting information and all the mobile stations in the group call/multicast share one SDCCH, which is also called a listener SDCCH because it is used for a listener mobile station reporting information. The normal communications of the listener mobile stations are not influenced because no link is established in an SDCCH in advance, listener mobile stations need only to report an AB at a fixed position, and thus the used time is very short, only several ms in general. Moreover, this embodiment is adaptable to the listener mobile stations, and the speaker mobile station may directly transfer information to the network side through the uplink.

In a GSM communication system, the SDCCH is a dedicated control channel and the mapped physical channel in the SDCCH is multiple time slots in the multiframe. In this embodiment, a multiframe is used for one unit of physical channel and the multiframe may be of different types. In this embodiment, a 2 × 51 multiframe is used for one unit of physical channel. Practically a 4 × 51 multiframe or other multiframes may also be used for one unit of physical channel. There are 102 frames and 8 mapped SDCCHs in each 2 × 51 multiframe; each SDCCH is mapped into 12 time slots, and each of the time slots occupies one AB accordingly. For a 4 × 51 multiframe, each SDCCH is mapped into 24 time slots, and each of the time slots occupies one AB accordingly. The number of ABs occupied by a SDCCH in other types of multiframe may be inferred in the same way above mentioned.

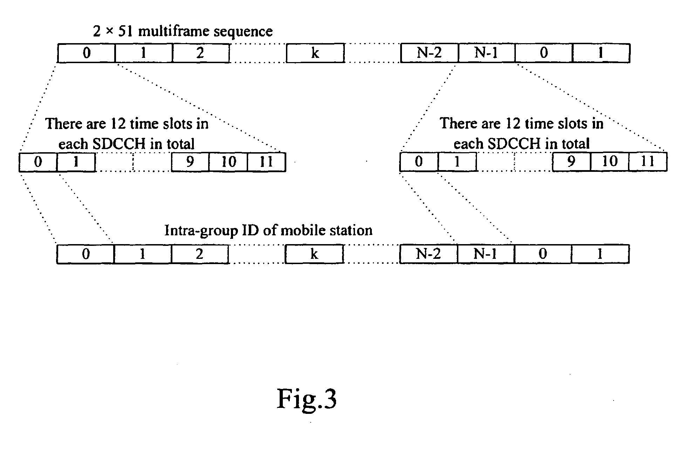

Fig.3 shows a diagram illustrating the principle for the corresponding between the listener mobile stations in the group of the group call/multicast and the reporting positions of the ABs in the time slot sub-channel in accordance with the second embodiment of the present invention. As shown in Fig.3, the 2 × 51 multiframe sequence is sent in a circular manner. There are 102 frames and 8 mapped SDCCHs in each 2 × 51 multiframe. And there are 12 time slots, which occupy 12 ABs accordingly, in each SDCCH. Only one of the 8 SDCCHs is shown in Fig.3 for the sake of describing clearly. In this embodiment, one or more SDCCHs in the 2 × 51 multiframe may be designated as dedicated information reporting channels of listener mobile station, and for one group call/multicast, only one SDCCH is designated as the information reporting channel of the listener mobile stations in the group call/multicast. An SDCCH in the 2 × 51 multiframe sequence may be divided into sub-channels based on time slot. For example, a signal time slot among the 12 time slots of the SDCCH in the 2 × 51 multiframe sequence may be used for a sub-channel, multiple time slots may be used for a sub-channel, or all the time slots may be used for a sub-channel. Each sub-channel is allocated for a group call/multicast, the intra-group numbers, i.e. the intra-group IDs, of the different listener mobile stations in the group call/multicast respectively correspond to the different AB positions in the sub-channel, and the different listener mobile stations respectively report an AB at the corresponding AB position. The sub-channel is also called a Listener_SDCCH and called a time slot sub-channel in brief.

For example, the first time slot, i.e. the time slot with the serial number of "0", among the 12 time slots of a designated SDCCH in the 2 × 51 multiframe sequence is used for a time slot sub-channel for reporting information of all the listener mobile stations during a group call/multicast process. If a group call/multicast includes N mobile stations, the intra-group numbers, i.e. the intra-group IDs, are 0, 1, 2......, N—1 respectively, and each of the mobile stations may be a listener mobile station, the AB position corresponding to Number "0" time slot of the designated SDCCH in the 2 × 51 multiframe with the serial number of "0" is used for reporting information of the listener mobile station with the intra-group ID of "0", the AB position corresponding to Number "0" time slot of the designated SDCCH in the 2 × 51 multiframe with the serial number of "1" is used for reporting information of the listener mobile station with the intra-group ID of "1", the rest may be inferred in the same way mentioned above, till the AB position corresponding to Number "0" time slot of the designated SDCCH in the 2 × 51 multiframe with the serial number of "N—1" is used for reporting information of the listener mobile station with the intra-group ID of "N—1". Thus, the above Number "0" time slots of the designated SDCCH in the 2 × 51 multiframe sequence with the serial numbers of "0" to "N—1" compose a time slot sub-channel for reporting the information of a group call/multicast.

The time slot sub-channel may be described by multiple methods. For example, in this embodiment, an OCTET is used to describe a time slot sub-channel. In the OCTET, the high four bits (NH) are used to denote the type of the sub-channel, i.e. the number of the ABs occupied by each time slot sub-channel in the designated SDCCH in a 2 × 51 multiframe, which may also be called the time slot capacity of time slot sub-channel. For an SDCCH including 12 time slots, the time slot capacity of the time slot sub-channel may be 1, 2, 3, 4, 6 or 12; the low four bits (NL) are used to identify the position of the time slot sub-channel in the designated SDCCH in the current 2 × 51 multiframe, that is, the NL are used to identify the number of the sub-channel in the designated SDCCH in the current 2 × 51 multiframe. The description of the detailed values in dividing a 2 × 51 multiframe into time slot sub-channels is shown in Table 1.

**Table 1**

| NH (the high 4 bits) | NL (the low 4 bits) | Position of the time slot sub-channel in the designated SDCCH in the current 2 × 51 multiframe |
|---|---|---|
| 1. Each time slot sub-channel occupies only one AB in a 2 × 51 multiframe | There are 12 time slot sub-channels in total and NL is less than 12 | the NLth time slot sub-channel |
| 2. Each time slot sub-channel occupies only 2 continuous adjacent ABs in a 2 × 51 multiframe | There are 6 time slot sub-channels in total and the NL is less than 6 | the NLth time slot sub-channel |
| 3. Each time slot sub-channel occupies only 3 continuous adjacent ABs in a 2 × 51 multiframe | There are 4 time slot sub-channels in total and the NL is less than 4 | the NLth time slot sub-channel |
| 4. Each time slot sub-channel occupies only 4 continuous adjacent ABs in a 2 × 51 multiframe | There are 3 time slot sub-channels in total and the NL is less than 3 | the NLth time slot sub-channel |
| 6. Each time slot sub-channel occupies only 6 continuous adjacent ABs in a 2 × 51 multiframe | There are 2 time slot sub-channels in total and the NL is less than 2 | the NLth time slot sub-channel |
| 12. Each time slot sub-channel occupies only 12 continuous adjacent ABs in a 2 × 51 multiframe | There is only one time slot sub-channel and the NL equals to 0 | The designated SDCCH is a single time slot sub-channel |

As shown in Table 1, the main description information of a time slot sub-channel includes the NH and the NL indicating that the time slot sub-channel occupies NH continuous adjacent ABs in the 2 × 51 multiframe and that the time slot sub-channel is the NLth time slot sub-channel in the SDCCH, respectively.

The network side may determine the time slot capacity of the time slot sub-channel based on the number of the mobile stations in the group of the group call/multicast and the information reporting periods of the mobile stations in the group required by the mobile stations, divide the SDCCH into time slot sub-channels, and allocate a time slot sub-channel for the group call/multicast; for the group call/multicast with the same number of mobile stations in the group, the shorter the required reporting period is, the more continuous adjacent ABs are to be allocated as the sub-channel; and the longer the required reporting period is, the fewer continuous adjacent ABs are to be allocated as the sub-channel. For the group call/multicast with the same required reporting period, the larger the number of mobile stations in the group is, the more continuous adjacent ABs are to be allocated as the sub-channel; and the smaller the number of mobile stations in the group is, the fewer continuous adjacent ABs are to be allocated as the sub-channel. With respect to the number of the sub-channel in the designated SDCCH, i.e. the allocated sub-channel, it is determined based on the idle situation of the sub-channels in the current SDCCH.

For example, since the period of a 2 × 51 multiframe is about 471 ms, if the number of mobile stations in the group call/multicast is 10, a time slot sub-channel occupying one AB may be allocated if the required reporting period of mobile stations in the group is 4710 ms. Thus, the reporting period of the group call/multicast is 10 periods of a 2 × 51 multiframe, i.e. about 4710 ms. A time slot sub-channel occupying two ABs may be allocated if the required reporting period of mobile stations in the group is 471 × 5 ms. Thus, the reporting period of the group call/multicast is 5 periods of a 2 × 51 multiframe, i.e. about 471 × 5 ms.

Furthermore, a time slot sub-channel may also be obtained by dividing based on the number of mobile stations in the group and a preset threshold, and the time slot sub-channel may be allocated for the current group call/multicast. The larger the number of mobile stations in the group is, the larger the capacity of the sub-channel to be allocated is; the smaller the number of mobile stations in the group is, the smaller the capacity of the sub-channel to be allocated is. For example, a sub-channel occupying only one AB is allocated for a group with the number of mobile stations less than 10, a sub-channel occupying two ABs is allocated for a group with the number of mobile stations ranging from 10 to 20, and the rest may be inferred in the same way mentioned above.

As examples, two detail schemes for allocating a time slot sub-channel are described above. However, it can be understood that any scheme in which a time slot sub-channel is obtained by division and allocated with a time slot as the unit, should be covered by the protection scope of the present invention.

In the time slot sub-channel, the AB positions correspond to the intra-group numbers of the listener mobile stations, and the mapping relationships may be determined with the following method.

A time slot sub-channel corresponds to a sequence of 2 × 51 multiframes, the serial numbers of which are 0, 1, 2, 3......, Integer [MaximumID/NH] — 1, wherein MaximumID is the maximal intra-group number of mobile station in the group call/multicast, i.e. the number of the mobile stations in the group, the NH is the time slot capacity of the time slot sub-channel, and Integer denotes rounding up, for example, Integer[3.4] = 4. In addition, the serial numbers may also be 1, 2, 3, 4......, Integer[Maximum]D/NH], respectively. To sum up, the number of the 2 × 51 multiframes occupied by a time slot sub-channel is Integer [MaximumID/NH].

If an intra-group number of a mobile station in the group call/multicast is ID, the reporting position of AB corresponding to the mobile station may be denoted as: the serial number of the multiframe belonging to the AB, or the detailed position of the AB in the multiframe belonging to the AB. The multiframe is a 2 × 51 multiframe, and the serial number of the multiframe belonging to the AB is obtained based on the formula: Integer[ID/NH]-1, wherein Integer[ID/NH] denotes rounding up ID/NH; the detailed position of the AB in the multiframe belonging to the AB may be obtained with the formula: Mode [ID/NH], which denotes the Mode [ID/12]th AB position in the designated SDCCH in the current multiframe, wherein Mode denotes extracting the mode of ID/NH, for example, MODE[I5/12]=3. If the serial numbers of the 2 × 51 multiframes are 1, 2, 3, 4......, Integer [MaximumID/NH], respectively, the serial number of the multiframe belonging to the AB is Integer [ID/NH]. To sum up, the serial number of the multiframe belonging to the AB denotes that the multiframe belonging to the AB is the Integer [MaximumID/NH]th multiframe in the multiframe sequence occupied by the time slot sub-channel.

In order that the network side is enabled to obtain the state of a mobile station in the group call in real time, the mobile station needs to periodically report information of its state at the AB position, and the interval of period is the number of the occupied multiframes in the multiframe sequence, i.e. Integer [MaximumID/iVH) 2 × 51 multiframes. The information to be reported needs to include the intra-group ID of the mobile station. Moreover, since an AB may include a space of 8 bits or 11 bits, in this embodiment, the AB with an 11 bit space is used, and 8 bits of the 11 bits are used to indicate the intra-group ID of the mobile station and the other 3 bits are used to indicate other information. Since the maximal binary number that may be denoted by 8 bits is 11111111, only 256 ID numbers may be denoted farthest if all the 8 bits are used to record the intra-group ID of a listener mobile station. Thus, during a group call/multicast process whose numbers of the mobile stations in the group are larger than 256, the listener mobile station with the intra-group ID number larger than 256 can not be denoted. Therefore, in this embodiment, the intra-group ID of a listener mobile station is denoted as Mode [ID/256]. If 6 bits in an AB are used to record the intra-group ID of a listener mobile station, 64 ID numbers may be denoted farthest. Therefore, in this case, the intra-group ID of a listener mobile station carried in the AB may be denoted as MODE [ID/64].

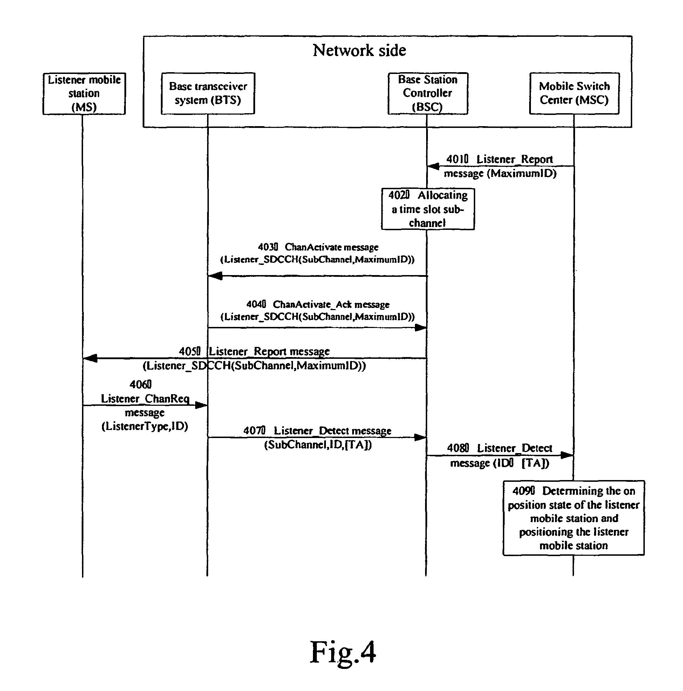

Fig.4 shows a flow chart for the network side obtaining information of a listener mobile station in the group call/multicast process in a GSM-based trunking communication system in accordance with the second embodiment of the present invention. As shown in Fig.4, the processes mainly include the followings.

In block 401: a Mobile Switch Center (MSC) sends a listener report (Listener_Report) message carrying the maximal number of the mobile stations (MaximumID) in the group call/multicast to the Base Station Controller (BSC) in the Base Station Subsystem (BSS) after a group call/multicast is established.

In block 402: the BSC receives the Listener_Report message, divides the SDCCH into time slot sub-channels with a time slot as the unit, allocates a time slot sub-channel for the group call/multicast, and stores the mapping relationship between the time slot sub-channel and the group call/multicast.

As described above, the detailed process for obtaining the time slot sub-channel by dividing and allocating the time slot sub-channel in this step includes the following:
determining the time slot capacity of the needed time slot sub-channel, i.e. NH, based on the maximal number of the mobile stations in the group call and information reporting period of the mobile stations in the group required by the group call/multicast subscribers, or determining the time slot capacity of the needed time slot sub-channel, i.e. NH, based on the number of the mobile stations in the group and a predetermined threshold;
determining the number of 2 × 51 multiframes included in the 2 × 51 multiframe sequence occupied by the time slot sub-channel with the formula: Integer[MaximumID/NH];
dividing the designated SDCCH in an occupied 2 × 51 multiframe into 12/NH time slot sub-channels based on NH, wherein each of the time slot sub-channels includes NH time slots; using, based on the current using situation of the radio resources in the communication system, the time slot sub-channel which has been obtained by dividing and is composed of idle and available time slots as the time slot sub-channel to be allocated for the current group call/multicast; and determining a position NL of the allocated time slot sub-channel in the dedicated control channel, that is, the position NL of the allocated idle and available time slots in the dedicated control channel.

In this case, what may be determined with the above process is that: the allocated time slot sub-channel occupies Integer [MaximumID/NH] multiframes, and is the NLth time slot sub-channel in the SDCCH in the multiframe, wherein the single multiframe occupies NH ABs farthest.

In block 403: the BSC sends a ChanActivate message containing the description information of the time slot sub-channel in the SDCCH of the listener mobile station, Listener_SDCCH(SubChannel,MaximumID), to the BTS, wherein SubChannel is the description of the time slot sub-channel and includes NH and NL, the MaximumID is the maximal number of the mobile stations in the group.

In block 404: the BTS receives the ChanActivate message, verifies whether the frame resource sub-channel described in the message is valid according to Sub Channel and MaximumID, that is, verifies whether the resource of the described frame resource sub-channel is available, and if yes, the BTS activates the sub-channel and returns a successful channel activate response (ChanActivate_Ack) message carrying the description information of the activated frame resource sub-channel, i.e. Listener_SDCCH (SubChannel, MaximumID), to the BSC; otherwise, the BTS returns a failing ChanActivate_Ack message to the BSC.

How to verify whether the frame resource sub-channel is valid in this step is an existing common technology and will not be described in detail.

In block 405: the BSC receives the ChanActivate_Ack message, verifies whether the BTS has succeeded in activating the time slot sub-channel allocated for the group call/multicast according to the ChanActivate_Ack message, and if yes, the BSC periodically sends a Listener_Report message carrying the description information of the time slot sub-channel allocated for the current group call/multicast: Listener SDCCH(SubChannel,MaximumID); otherwise, terminate this process.

The interval at which the BSC periodically sends the Listener_Report message in this step is Integer [MaximumID/NH] 2 × 51 multiframes.

After a group call/multicast is established successfully, a listener mobile station in the current group call/multicast is in the group call/multicast channel listening state all along, so as to receive information transferred by the network side, and the listener mobile station performs Step 406 after receiving the Listener_Report message from the BSC.

In block 406: the listener mobile station obtains the description information of the time slot sub-channel in the Listener_Report message, i.e. Listener_SDCCH(SubChannel,MaximumID); determines the reporting position of AB corresponding to the listener mobile station in the frame resource sub-channel based on SubChannel, MaximumID and its intra-group ID, reports a Listener_ChanReq message containing the intra-group ID of the listener mobile station and the ListenerType of the listener mobile station to the BTS by triggering an AB at the AB position. In this embodiment, the intra-group ID of a listener mobile station is denoted as Mode [ID/256]; the ListenerType is identified with a distinguishing code indicating whether the AB is valid. If the AB is disturbed in the reporting process and the distinguishing code is changed as the result, the distinguishing code indicates that the AB is invalid; otherwise, the distinguishing code indicates that the AB is valid. The listener mobile station returns to the group call/multicast channel listening state at once after reporting a Listener_ChanReq message every time.

In the process of the block 406, the detailed process for determining the reporting position of AB corresponding to the listener mobile station includes the steps of: firstly, determining that the reporting period is a sequence composed of Integer[MaximumlD/NH] 2 × 51 multiframes; then, obtaining the serial number of the 2 × 51 multiframe belonging to the ABs corresponding to the mobile station in the 2 × 51 multiframe sequence with the formula: Integer[ID/NH]- 1; finally, obtaining the detailed serial number of the AB corresponding to the mobile station in the 2 × 51 multiframe belonging to the AB with the formula: Mode [ID/NH]. Accordingly, the position of the AB corresponding to the current listener mobile station is determined as the Mode [ID/NH]th AB position in the SDCCH in the Integer[ID/NH]th 2 × 51 multiframe among the Integer[MaximumID/NH] 2 × 51 multiframes.

In addition, MaximumID in the above description information of the time slot sub-channel may be replaced with the number of the multiframes occupied by the allocated time slot sub-channel, Integer [MaximumID/NH]. Thus, the process for calculating the number of the multiframes occupied by the time slot sub-channel may be omitted.

A mobile station in the group call/multicast performs the process in block 406 upon receiving a Listener_Report message, and thus the listener mobile station may periodically send a Listener_ChanReq message with the period of Integer [MaximumID/NH] multiples of 2 × 51 multiframe. In addition, in the process in block 405, the BSC may issue a Listener_Report message to the listener mobile stations only once; and in the process in block 406, the listener mobile station initially sends a Listener_ChanReq message to the network side periodically with the period of Integer[MaximumID/NH] multiples of 2 × 51 multiframe.

In block 406: the BTS receives the AB from the listener mobile station, parses the AB to obtain the contents of the Listener_ChanReq message, verifies whether the ListenerType is valid, and if yes, the BTS keeps on performing this step, otherwise, the BTS determines that the current AB is not the AB reported by the listener mobile station, and terminate this process.

The BTS verifies, based on the mapping relationship between the intra-group IDs of listener mobile stations and the reporting positions of AB in the time slot sub-channel determined based on the above method of AB positioning, whether the included intra-group ID of the listener mobile station corresponds to the actual reporting position of the current AB correctly, and if yes, the BTS sends a Listener_Detect message containing the description of the time slot sub-channel corresponding to the actual reporting position of the current AB, SubChannel, and the intra-group ID of the listener mobile station to the BSC; otherwise, the BTS determines that the current AB accesses the network side in a wrong way, and terminate this process.

In the process in the block 406, the detailed process for verifying whether the intra-group ID of the listener mobile station included in the Listener_ChanReq message corresponds to the actual reporting position of the current AB correctly may include the followings:
firstly, obtaining the intra-group ID of the listener mobile station in the **Listener_ChanReq** message, and obtaining the reporting position of AB corresponding to the intra-group ID of the listener mobile station with the formulas K+ Integer[ID/NH]—1 and Mode [ID/NH], and if the obtained reporting position of AB is the same as the actual reporting position of the current AB, determining that the intra-group ID of the listener mobile station corresponds to the actual reporting position of the current AB correctly; otherwise, determining that the intra-group ID of the listener mobile station does not correspond to the actual reporting position of the current AB.

The above detailed process for verifying whether the intra-group ID of the listener mobile station included in the Listener_ChanReq message corresponds to the actual reporting position of the current AB correctly may also include the steps of:
firstly, obtaining the actual reporting position of the current AB which includes the serial number of the 2 × 51 multiframe belonging to the current AB and the detailed position of the current AB in the SDCCH in the 2 × 51 multiframe; then performing an inverse calculation based on the formulas, lnteger[ID/NH]-1 and Mode [ID/NH], to obtain the intra-group ID of the listener mobile station and performing the processing with the formula Mode[ID/256], comparing the obtained result with the intra-group ID of the listener mobile station included in the Listener_ChanReq message, and if the two are the same, determining that the intra-group ID of the listener mobile station corresponds to the actual reporting position of the current AB correctly; otherwise, determining that the intra-group ID of the listener mobile station does not correspond to the actual reporting position of the current AB.

In addition, in this step, the BTS may further calculate the value of TA and contain the value of the TA in a Listener_Detect message. Considering that how to calculate the value of TA is an existing common technology, it will not be described in detail.

In block 408: the BSC receives the Listener_Detect message from the BTS, searches for the group call/multicast corresponding to the time slot sub-channel based on the description information of sub-channel in the Listener_Detect message, and reports a Listener_Detect message carrying the intra-group ID of the current listener mobile station and the value of TA to the MSC through the SCCP connection corresponding to the listener reporting cell in the group call/multicast.

In block 409: the MSC receives the Listener_Detect message from the BSC, reads the intra-group ID of the listener mobile station and the value of TA contained in the Listener_Detect message, and performs commanding and scheduling based on the read data. For example, the corresponding Cell ID in the group call/multicast may be found based on the current SCCP connection, and thus it is determined that the listener mobile station identified by the intra-group ID of listener mobile station is in the on position state participating in the group call/multicast in the group call/multicast cell identified by the Cell ID; meanwhile, the MSC may further position the listener mobile station based on the Cell ID and the value ofTA, and terminate this proceess.

For each listener mobile station, the process of blocks 405 to 409 occurs periodically and the length of the period is the multiframe sequence period, that is, Integer[MaximumID/NH] multiples of 2 × 51 multiframe.

In this embodiment, the above Listener_ChanReq message sent by a listener mobile station to the network side may also include other information indicating its states, such as the parameters of the process of the listener mobile station participating in the group call/multicast.

The network side in accordance with this embodiment may also determine the intra-group ID of listener mobile station having reported the AB on the position according to the actual position where the listener mobile station reports the AB, and a one-to-one mapping relationship between the listener mobile stations and the AB positions in the time slot sub-channel; the network side in accordance with this embodiment may also verify whether the intra-group ID is valid, if the intra-group ID is valid, the network side determines that the listener mobile station corresponding to the intra-group ID is in the on position state, and otherwise, terminate the process.

In addition, all the cells in the area of the group call/multicast perform the processes shown in Fig.4.

The information of one listener mobile station is reported may be achieved as about 40 ms, and this reporting speed is high and the real time efficiency is high. In this embodiment, because a time slot sub-channel is allocated with a time slot as the unit, the 2 × 51 multiframe may be used to attain the objective of the present invention, the period of the 2 × 51 multiframe is about 471 ms, a Standalone Dedicated Control Channel (SDCCH) in the 2 × 51 multiframe occupies 12 time slots, and each time slot is used to report the information of one listener mobile station.

The foregoing are only preferred embodiments of the present invention. The protection scope of the present invention, however, is not limited to the above description. Any change or substitution, within the technical scope disclosed by the present invention, easily occurring to those skilled in the art should be covered by the protection scope of the present invention.

## Claims

1. A method for obtaining information of listener mobile stations in a group call/multicast process in a trunking communication system based on a public network, **characterized by** the method comprising:
designating a dedicated control channel in a multiframe sequence for listener mobile stations reporting information;
allocating a sub-channel in the dedicated control channel for a group call/multicast in response to the group call/multicast being established;
sending description information of the sub-channel allocated to the mobile stations in the group call/multicast;
determining, a position of the sub-channel in the dedicated control channel according to the description information of the sub-channel;
determining an access burst AB position in the sub-channel corresponding to a listener mobile station based on a mapping relationship between listener mobile stations in the group call/multicast and AB positions in the sub-channel;
reporting an AB to a network side via the determined AB position; and
obtaining information of the listener mobile station based on the reported AB.

2. The method of claim 1, wherein the allocating the sub-channel in the dedicated control channel for the group call/multicast comprises:
allocating the sub-channel by taking a multiframe in the multiframe sequence as a basic frame resource unit, wherein the sub-channel allocated is defined as a frame resource sub-channel.

3. The method of claim 2, wherein the allocating the frame resource sub-channel comprises:
determining the number of the multiframes needed by the group call/multicast, the number of the multiframes needed by the group call/multicast is represented by L;
if there are L multiframes available in the multiframe sequence, allocating the designated dedicated control channel in the L multiframes as the frame resource sub-channel for the group call/multicast.

4. The method of claim 3, wherein the determining the number of the multiframes needed by the group call/multicast comprises:
obtaining a number of the mobile stations in the group call/multicast;
dividing the number of the ABs occupied by the designated dedicated control channel in an individual multiframe by the number of the mobile stations in the group call/multicast to obtain a quotient;
rounding up the obtained quotient to obtain a value as the number of the multiframes needed by the group call/multicast.

5. The method of claim 2, wherein the reporting the AB to the network side by taking a sequence of the multiframe sequence occupied by the sub-channel as a period.

6. The method of claim 2, wherein the mapping relationship between the listener mobile stations in the group call/multicast and the AB positions in the frame resource sub-channel comprises: a mapping relationship of intra-group IDs of the listener mobile stations corresponding to the AB positions in the frame resource sub-channel orderly.

7. The method of claim 6, wherein the information of the listener mobile station indicates whether the listener mobile station is on position; and
the obtaining the information of the listener mobile station based on the AB comprises:
determining an AB position;
determining the intra-group ID of listener mobile station corresponding to the AB position based on the mapping relationship between intra-group IDs of the listener mobile stations and the AB positions in the frame resource sub-channel;
if the intra-group ID is valid, determining that the listener mobile station corresponding to the intra-group ID is on position.

8. The method of claim 6, wherein the AB contains the intra-group ID of the listener mobile station;
the obtaining the information of the listener mobile station based on the AB comprises:
parsing the AB to obtain the intra-group ID of the listener mobile station contained in the AB;
determining the listener mobile station corresponding to the intra-group ID on position.

9. The method of claim 8, wherein the determining that the listener mobile station corresponding to the intra-group ID is on position comprises:
checking whether the AB position corresponds to the intra-group ID of listener mobile station carried in the AB according to the mapping relationship between the intra-group IDs of the listener mobile stations and the AB positions in the frame resource sub-channel; and
determining the listener mobile station corresponding to the intra-group ID on position in response to checking the AB position corresponds to the intra-group ID of listener mobile station.

10. The method of claim 9, wherein the reported AB further contains an access type of the listener mobile station;
the method further comprises before checking whether the AB position corresponds to the intra-group ID of listener mobile station carried in the AB:
determining the access type is valid.

11. The method of claim 6, wherein the determining the AB position corresponding to the listener mobile station in the frame resource sub-channel comprises:
dividing the number of the ABs occupied by the designated dedicated control channel in an individual multiframe by the intra-group ID of the listener mobile station and obtaining a first quotient;
rounding up the first quotient and adding a serial number of a start multiframe of the frame resource sub-channel in the multiframe sequence to the first quotient to obtain the serial number of a multiframe belonging to the AB and corresponding to the intra-group ID of listener mobile station in the multiframe sequence;
dividing the number of the ABs occupied by the designated dedicated control channel in a multiframe by the intra-group ID of the listener mobile station to obtain a second quotient;
extracting a mode of the second quotient, obtaining a serial number of a position of the AB corresponding to the intra-group ID of the listener mobile station in the frame resource sub-channel in the multiframe belonging to the AB.

12. The method of claim 2, further comprising:
storing a first relationship between the frame resource sub-channel allocated for the group call/multicast and the group call/multicast;
determining a position of the AB and the frame resource sub-channel belonging to the AB based on the position of the AB; and
determining the group call/multicast belonging to the listener mobile station and corresponding to the AB, based on the first relationship between the frame resource sub-channel and the group call/multicast.

13. The method of claim 1, wherein the allocating the sub-channel in the dedicated control channel for the group call/multicast comprises:
allocating the sub-channel by taking a time slot in the multiframe sequence as a basic unit;
wherein the sub-channel is defined as a time slot sub-channel.

14. The method of claim 13, wherein the allocating the time slot sub-channel comprises:
determining a time slot capacity of the time slot sub-channel in each multiframe needed by the group call/multicast, based on the number of the mobile stations in the group call/multicast;
dividing the time slot capacity of the time slot sub-channel by the number of the mobile stations in the group call/multicast to obtain a third quotient;
rounding up the third quotient to obtain the number of the multiframes occupied by the time slot sub-channel;
allocating idle time slots in the designated dedicated control channel in each occupied multiframe, wherein the number of the allocated idle time slots is equal to the number of the time slot capacity;
determining positions of the idle time slots in the dedicated control channel; and
using the idle time slots as the allocated time slot sub-channel.

15. The method of claim 14, wherein the description information of the time slot sub-channel comprises:
the number of the multiframes occupied by the allocated time slot sub-channel;
the time slot capacity of the time slot sub-channel; and
a position of the time slot sub-channel in the dedicated control channel.

16. The method of claim 14, wherein the description information of the time slot sub-channel comprises:
the number of the mobile stations in the group call/multicast;
the time slot capacity of the allocated time slot sub-channel; and
the position of the time slot sub-channel in the dedicated control channel;
the method further comprises after sending description information of the sub-channel to the mobile stations in the group call/multicast:
dividing the time slot capacity of the time slot sub-channel by the number of the mobile stations in the group call/multicast to obtain a forth quotient;
rounding up the forth quotient to obtain the number of the multiframes occupied by the time slot sub-channel.

17. The method of claim 13, wherein the reporting the AB by taking the number of the multiframes occupied by the allocated time slot sub-channel as a period.

18. The method of claim 13, wherein the mapping relationship between the listener mobile stations and the AB positions in the time slot sub-channel comprises:
a mapping relationship of the intra-group IDs of the listener mobile stations corresponding to the AB positions in the time slot sub-channel orderly.

19. The method of claim 18, wherein the information of the listener mobile station includes information indicating whether the listener mobile station is on position;
the obtaining the information of the listener mobile station based on the AB comprises:
determining an AB position;
determining the intra-group ID of listener mobile station corresponding to the AB position based on the mapping relationship between intra-group IDs of the listener mobile stations and the AB positions in the time slot sub-channel;
if the intra-group ID is valid, determining that the listener mobile station corresponding to the intra-group ID is on position.

20. The method of claim 18, wherein the reported AB contains the intra-group ID of the listener mobile station;
the obtaining the information of the listener mobile station based on the AB comprises:
parsing the AB to obtain the intra-group ID of the listener mobile station contained in the AB;
determining the listener mobile station corresponding to the obtained intra-group ID on position.

21. The method of claim 20, wherein the determining the listener mobile station corresponding to the intra-group ID obtained on position comprises:
checking whether the AB position corresponds to the intra-group ID of listener mobile station contained in the AB, based on the mapping relationship between the intra-group IDs of the listener mobile stations and the AB positions in the time slot sub-channel; and
determining the listener mobile station on position in response to checking the AB position corresponds to the intra-group ID of listener mobile station.

22. The method of claim 21, wherein the reported AB further contains an access type of the listener mobile station;
the method further comprises before checking whether the AB position corresponds to the intra-group ID of listener mobile station contained in the AB:
determining the access type of the listener mobile station is valid.

23. The method of claim 18, wherein the determining the AB position corresponding to the listener mobile station in the time slot sub-channel comprises:
dividing the time slot capacity of the time slot sub-channel by the intra-group ID of the listener mobile station to obtain a fifth quotient;
rounding up the fifth quotient, and subtracting one from the fifth quotient to obtain a serial number of a multiframe belonging to the AB corresponding to the intra-group ID of listener mobile station in the multiframes occupied by the time slot sub-channel;
dividing the time slot capacity of the time slot sub-channel by the intra-group ID of the listener mobile station;
extracting a mode of the fifth quotient to obtain a serial number of a position of the AB corresponding to the intra-group ID of listener mobile station in the time slot sub-channel allocated in the multiframe belonging to the AB.

24. The method of claim 13, further comprising:
storing a second mapping relationship between the allocated time slot sub-channel for the group call/multicast and the group call/multicast; and
determining the AB position in response to receiving the AB;
determining a time slot sub-channel belonging to the AB based on the AB position; and
determining the group call/multicast belonging to the listener mobile station corresponding to the AB based on the second relationship between the time slot sub-channel and the group call/multicast.

25. The method of claim 4, 14 or 16, wherein the number of the mobile stations in the group can/multicast is obtained by a maximal ID of mobile stations in the group call/multicast.

26. The method of claim 8, 9, 10, 20, 21 or 22, wherein the parsing the AB to obtain the intra-group ID of the listener mobile station contained in the AB comprises:
dividing a maximal number identified by a space for storing an ID in the AB by the intra-group ID of the mobile station to obtain a sixth quotient; and
extracting a mode of the sixth quotient and determining the mode as the intra-group ID of mobile station contained in the AB.

27. The method of any of claims 1 to 24, wherein the public network comprises a mobile communication network based on the Global System for Mobile communications.

28. The method of claim 27, wherein the dedicated control channel comprises a standalone dedicated control channel.

29. A trunking communication system, **characterized by** the trunking communication system comprising:
a network side, adapted to designate a dedicated control channel in a multiframe sequence for listener mobile stations reporting information, allocate a sub-channel available in the dedicated control channel for a group call/multicast established, send description information of the sub-channel allocated to the mobile stations in the group call/multicast, and obtaining information of the listener mobile station based on an access burst AB reported by the listener mobile station;
at least one listener mobile station in the group call/multicast, adapted to determine a position of the sub-channel in the dedicated control channel according to the description information of the sub-channel, determine an AB position in the sub-channel corresponding to a listener mobile station based on a mapping relationship between the listener mobile stations in the group call/multicast and AB positions in the sub-channel, and reporting an AB to the network side via the determined AB position.

30. The trunking communication system of claim 29, wherein the network side allocates the sub-channel by taking a multiframe in the multiframe sequence as a basic frame resource unit.

31. The trunking communication system of claim 29, wherein the network side allocates the sub-channel by taking a time slot in the multiframe sequence as a basic unit.

32. The trunking communication system of claim 29, wherein the trunking communication system is based on a public network, and the public network is a mobile communication network based on the Global System for Mobile communications.

33. The trunking communication system of claim 30, wherein the network side comprises a Mobile Switch Center, a base station controller and a base transceiver system;
the Mobile Switch Center is configured to send the number of the mobile stations in the group call/multicast to the base station controller;
the base station controller is configured to determine the sub-channel of the group call/multicast based on a maximal number of the mobile stations of the group call/multicast, send the description information of the determined sub-channel to the base transceiver system; and the base station controller is configured to verify whether a successful activation is received, send the description information of the sub-channel to the listener mobile station if the successful activation is received by the base station controller;
the base transceiver system is configured to receive the description information of the sub-channel, verify whether the sub-channel described is available, activate the sub-channel allocated and return a successful activation response to the base station controller if the described sub-channel is available, and return a failing activation response to the base station controller if the described sub-channel is unavailable.

34. The trunking communication system of claim 29, wherein the network side comprises a Mobile Switch Center, a base station controller and a base transceiver system; and
the base transceiver system is configured to receive the AB and obtain the information of the listener mobile station based on the AB; and send the information of the listener mobile station to the Mobile Switch Center via the base station controller;
and the Mobile Switch Center is configured to perform commanding and scheduling based on the information of the listener mobile station.

## Patentansprüche

1. Verfahren zum Erhalten von Informationen von Zuhörer-Mobilstationen in einem Gruppenanruf-/Multicastprozess in einem Bündelkommunikationssystem auf der Basis eines öffentlichen Netzes, **dadurch gekennzeichnet, dass** das Verfahren die folgenden Schritte umfasst:
Designieren eines dedizierten Steuerkanals in einer Mehrfachrahmensequenz für Zuhörer-Mobilstationen, die Informationen melden;
Vergeben eines Subkanals in dem dedizierten Steuerkanal für einen Gruppenanruf/Multicast als Reaktion auf das Herstellen des Gruppenanrufs/Multicasts;
Senden von Beschreibungsinformationen des vergebenen Subkanals zu den Mobilstationen in dem Gruppenanruf/Multicast;
Bestimmen einer Position des Subkanals in dem dedizierten Steuerkanal gemäß den Beschreibungsinformationen des Subkanals;
Bestimmen der Position eines Access Burst AB in dem Subkanal, die einer Zuhörer-Mobilstation entspricht, auf der Basis einer Abbildungsbeziehung zwischen Zuhörer-Mobilstationen in dem Gruppenanruf/Multicast und AB-Positionen in dem Subkanal; Melden eines AB an eine Netzseite über die bestimmte AB-Position; und
Erhalten von Informationen der Zuhörer-Mobilstation auf der Basis des gemeldeten AB.

2. Verfahren nach Anspruch 1, wobei das Vergeben des Subkanals in dem dedizierten Steuerkanal für den Gruppenanruf/Multicast Folgendes umfasst:
Vergeben des Subkanals durch Nehmen eines Mehrfachrahmens in der Mehrfachrahmensequenz als eine grundlegende Rahmenressourceneinheit, wobei der vergebene Subkanal als ein Rahmenressourcen-Subkanal definiert ist.

3. Verfahren nach Anspruch 2, wobei das Vergeben des Rahmenressourcen-Subkanals Folgendes umfasst:
Bestimmen der Anzahl der von dem Gruppenanruf/Multicast benötigten Mehrfachrahmen, wobei die Anzahl der von dem Gruppenanruf/Multicast benötigten Mehrfachrahmen durch L dargestellt wird;
wenn L Mehrfachrahmen in der Mehrfachrahmensequenz verfügbar sind, Vergeben des designierten dedizierten Steuerkanals in den L Mehrfachrahmen als den Rahmenressourcen-Subkanal für den Gruppenanruf/Multicast.

4. Verfahren nach Anspruch 3, wobei das Bestimmen der Anzahl der von dem Gruppenanruf/Multicast benötigten Mehrfachrahmen Folgendes umfasst:
Erhalten einer Anzahl der Mobilstationen in dem Gruppenanruf/Multicast;
Dividieren der Anzahl der durch den designierten dedizierten Steuerkanal in einem einzelnen Mehrfachrahmen eingenommenen AB durch die Anzahl der Mobilstationen in dem Gruppenanruf/Multicast, um einen Quotienten zu erhalten;
Aufrunden des erhaltenen Quotienten, um einen Wert als die Anzahl der von dem Gruppenanruf/Multicast benötigten Mehrfachrahmen zu erhalten.

5. Verfahren nach Anspruch 2, wobei das Melden des AB an die Netzseite das Nehmen einer Sequenz der Mehrfachrahmensequenz, die durch den Subkanal eingenommen wird, als eine Periode umfasst.

6. Verfahren nach Anspruch 2, wobei die Abbildungsbeziehung zwischen den Zuhörer-Mobilstationen in dem Gruppenanruf/Multicast und den AB-Positionen in dem Rahmenressourcen-Subkanal Folgendes umfasst: eine Abbildungsbeziehung von gruppeninternen IDs der Zuhörer-Mobilstationen, die den AB-Positionen ordentlich in dem Rahmenressourcen-Subkanal entsprechen.

7. Verfahren nach Anspruch 6, wobei die Informationen der Zuhörer-Mobilstationen angeben, ob sich die Zuhörer-Mobilstation auf der Position befindet; und
das Erhalten der Informationen der Zuhörer-Mobilstation auf der Basis des AB Folgendes umfasst:
Bestimmen einer AB-Position;
Bestimmen der gruppeninternen ID der Zuhörer-Mobilstation, die der AB-Position entspricht, auf der Basis der Abbildungsbeziehung zwischen gruppeninternen IDs der Zuhörer-Mobilstationen und den AB-Positionen in dem Rahmenressourcen-Subkanal;
wenn die gruppeninterne ID gültig ist, Bestimmen, dass die Zuhörer-Mobilstation, die der gruppeninternen ID entspricht, auf der Position ist.

8. Verfahren nach Anspruch 6, wobei der AB die gruppeninterne ID der Zuhörer-Mobilstation enthält; und
das Erhalten der Informationen der Zuhörer-Mobilstation auf der Basis des AB Folgendes umfasst:
Parsen des AB, um die gruppeninterne ID der Zuhörer-Mobilstation, die in dem AB enthalten ist, zu erhalten;
Bestimmen, dass die Zuhörer-Mobilstation, die der gruppeninternen ID entspricht, auf der Position ist.

9. Verfahren nach Anspruch 8, wobei das Bestimmen, dass die Zuhörer-Mobilstation, die der gruppeninternen ID entspricht, auf der Position ist, Folgendes umfasst:
Prüfen, ob die AB-Position der gruppeninternen ID der Zuhörer-Mobilstation entspricht, die in dem AB geführt wird, gemäß der Abbildungsbeziehung zwischen den gruppeninternen IDs der Zuhörer-Mobilstationen und den AB-Positionen in dem Rahmenressourcen-Subkanal; und
Bestimmen, dass die Zuhörer-Mobilstation, die der gruppeninternen ID entspricht, auf der Position ist, als Reaktion auf das Prüfen, dass die AB-Position der gruppeninternen ID der Zuhörer-Mobilstation entspricht.

10. Verfahren nach Anspruch 9, wobei der gemeldete AB ferner einen Zugangstyp der Zuhörer-Mobilstation enthält; und
das Verfahren ferner vor dem Prüfen, ob die AB-Position der in dem AB geführten gruppeninternen ID der Zuhörer-Mobilstation entspricht, Folgendes umfasst:
Bestimmen, dass der Zugangstyp gültig ist.

11. Verfahren nach Anspruch 6, wobei das Bestimmen der AB-Position, die der Zuhörer-Mobilstation entspricht, in dem Rahmenressourcen-Subkanal Folgendes umfasst:
Dividieren der Anzahl der durch den designierten dedizierten Steuerkanal in einem einzelnen Mehrfachrahmen eingenommenen AB durch die gruppeninterne ID der Zuhörer-Mobilstation und Erhalten eines ersten Quotienten;
Aufrunden des ersten Quotienten und Addieren einer Seriennummer eines Anfangsmehrfachrahmens des Rahmenressourcen-Subkanals in der Mehrfachrahmensequenz zu dem ersten Quotienten, um die Seriennummer eines Mehrfachrahmens zu erhalten, der zu dem AB gehört und der der gruppeninternen ID der Zuhörer-Mobilstation in der Mehrfachrahmensequenz entspricht;
Dividieren der Anzahl der durch den designierten dedizierten Steuerkanal in einem Mehrfachrahmen eingenommenen AB durch die gruppeninterne ID der Zuhörer-Mobilstation, um einen zweiten Quotienten zu erhalten;
Extrahieren eines Teilerrests des zweiten Quotienten, Erhalten einer Seriennummer einer Position des AB, die der gruppeninternen ID der Zuhörer-Mobilstation in dem Rahmenressourcen-Subkanal in dem zu dem AB gehörenden Mehrfachrahmen entspricht.

12. Verfahren nach Anspruch 2, ferner mit den folgenden Schritten:
Speichern einer ersten Beziehung zwischen dem für den Gruppenanruf/Multicast vergebenen Rahmenressourcen-Subkanal und dem Gruppenanruf/Multicast;
Bestimmen einer Position des AB und des zu dem AB gehörenden Rahmenressourcen-Subkanals auf der Basis der Position des AB; und
Bestimmen des Gruppenanrufs/Multicast, der zu der Zuhörer-Mobilstation gehört und dem AB entspricht, auf der Basis der ersten Beziehung zwischen dem Rahmenressourcen-Subkanal und dem Gruppenanruf/Multicast.

13. Verfahren nach Anspruch 1, wobei das Vergeben des Subkanals in dem dedizierten Steuerkanal für den Gruppenanruf/Multicast Folgendes umfasst:
Vergeben des Subkanals durch Nehmen eines Zeitschlitzes in der Mehrfachrahmensequenz als eine grundlegende Einheit;
wobei der Subkanal als ein Zeitschlitz-Subkanal definiert ist.

14. Verfahren nach Anspruch 13, wobei das Vergeben des Zeitschlitz-Subkanals Folgendes umfasst:
Bestimmen einer Zeitschlitzkapazität des Zeitschlitz-Subkanals in jedem Mehrfachrahmen, der von dem Gruppenanruf/Multicast benötigt wird, auf der Basis der Anzahl der Mobilstationen in dem Gruppenanruf/Multicast;
Dividieren der Zeitschlitzkapazität des Zeitschlitz-Subkanals durch die Anzahl der Mobilstationen in dem Gruppenanruf/Multicast, um einen dritten Quotienten zu erhalten;
Aufrunden des dritten Quotienten, um die Anzahl der durch den Zeitschlitz-Subkanal eingenommenen Mehrfachrahmen zu erhalten;
Vergeben von leeren Zeitschlitzen in dem designierten dedizierten Steuerkanal in jedem eingenommenen Mehrfachrahmen, wobei die Anzahl der vergebenen leeren Zeitschlitze gleich der Anzahl der Zeitschlitzkapazität ist;
Bestimmen von Positionen der leeren Zeitschlitze in dem dedizierten Steuerkanal; und
Verwenden der leeren Zeitschlitze als den vergebenen Zeitschlitz-Subkanal.

15. Verfahren nach Anspruch 14, wobei die Beschreibungsinformationen des Zeitschlitz-Subkanals Folgendes umfassen:
die Anzahl der durch den vergebenen Zeitschlitz-Subkanal eingenommenen Mehrfachrahmen;
die Zeitschlitzkapazität des Zeitschlitz-Subkanals; und
eine Position des Zeitschlitz-Subkanals in dem dedizierten Steuerkanal.

16. Verfahren nach Anspruch 14, wobei die Beschreibungsinformationen des Zeitschlitz-Subkanals Folgendes umfassen:
die Anzahl der Mobilstationen in dem Gruppenanruf/Multicast;
die Zeitschlitzkapazität des vergebenen Zeitschlitz-Subkanals; und
die Position des Zeitschlitz-Subkanals in dem dedizierten Steuerkanal;
wobei das Verfahren ferner nach dem Senden von Beschreibungsinformationen des Subkanals zu den Mobilstationen in dem Gruppenanruf/Multicast Folgendes umfasst:
Dividieren der Zeitschlitzkapazität des Zeitschlitz-Subkanals durch die Anzahl der Mobilstationen in dem Gruppenanruf/Multicast, um einen vierten Quotienten zu erhalten;
Aufrunden des vierten Quotienten, um die Anzahl der durch den Zeitschlitz-Subkanal eingenommenen Mehrfachrahmen zu erhalten.

17. Verfahren nach Anspruch 13, wobei das Melden des AB das Nehmen der Anzahl der Mehrfachrahmen, die durch den vergebenen Zeitschlitz-Subkanal eingenommen werden, als eine Periode umfasst.

18. Verfahren nach Anspruch 13, wobei die Abbildungsbeziehung zwischen den Zuhörer-Mobilstationen und den AB-Positionen in dem Zeitschlitz-Subkanal Folgendes umfasst:
eine Abbildungsbeziehung der gruppeninternen IDs der Zuhörer-Mobilstationen, die den AB-Positionen in dem Zeitschlitz-Subkanal ordentlich entsprechen.

19. Verfahren nach Anspruch 18, wobei die Informationen der Zuhörer-Mobilstationen Informationen umfassen, die angeben, ob die Zuhörer-Mobilstation auf der Position ist; und
das Erhalten der Informationen der Zuhörer-Mobilstation auf der Basis des AB Folgendes umfasst:
Bestimmen einer AB-Position;
Bestimmen der gruppeninternen ID der Zuhörer-Mobilstation, die der AB-Position entspricht, auf der Basis der Abbildungsbeziehung zwischen gruppeninternen IDs der Zuhörer-Mobilstationen und den AB-Positionen in dem Zeitschlitz-Subkanal;
wenn die gruppeninterne ID gültig ist, Bestimmen, dass die Zuhörer-Mobilstation, die der gruppeninternen ID entspricht, auf der Position ist.

20. Verfahren nach Anspruch 18, wobei der gemeldete AB die gruppeninterne ID der Zuhörer-Mobilstation umfasst; und
das Erhalten der Informationen der Zuhörer-Mobilstation auf der Basis des AB Folgendes umfasst:
Parsen des AB, um die gruppeninterne ID der Zuhörer-Mobilstation, die in dem AB enthalten ist, zu erhalten; und
Bestimmen, dass die Zuhörer-Mobilstation, die der erhaltenen gruppeninternen ID entspricht, auf der Position ist.

21. Verfahren nach Anspruch 20, wobei das Bestimmen, dass die Zuhörer-Mobilstation, die der erhaltenen gruppeninternen ID entspricht, auf der Position ist, Folgendes umfasst:
Prüfen, ob die AB-Position der gruppeninternen ID der Zuhörer-Mobilstation, die in dem AB enthalten ist, entspricht, auf der Basis der Abbildungsbeziehung zwischen den gruppeninternen IDs der Zuhörer-Mobilstationen und den AB-Positionen in dem Zeitschlitz-Subkanal; und
Bestimmen, dass die Zuhörer-Mobilstation auf der Position ist, als Reaktion auf das Prüfen, dass die AB-Position der gruppeninternen ID der Zuhörer-Mobilstation entspricht.

22. Verfahren nach Anspruch 21, wobei der gemeldete AB ferner einen Zugangstyp der Zuhörer-Mobilstation enthält; und
das Verfahren ferner vor dem Prüfen, ob die AB-Position der gruppeninternen ID der Zuhörer-Mobilstation, die in dem AB enthalten ist, entspricht, Folgendes umfasst:
Bestimmen, dass der Zugangstyp der Zuhörer-Mobilstation gültig ist.

23. Verfahren nach Anspruch 18, wobei das Bestimmen der AB-Position, die der Zuhörer-Mobilstation entspricht, in dem Zeitschlitz-Subkanal Folgendes umfasst:
Dividieren der Zeitschlitzkapazität des Zeitschlitz-Subkanals durch die gruppeninterne ID der Zuhörer-Mobilstation, um einen fünften Quotienten zu erhalten;
Aufrunden des fünften Quotienten und Subtrahieren von 1 von dem fünften Quotienten, um eine Seriennummer eines Mehrfachrahmens zu erhalten, der zu dem AB gehört, der der gruppeninternen ID der Zuhörer-Mobilstation in den durch den Zeitschlitz-Subkanal eingenommenen Mehrfachrahmen entspricht;
Dividieren der Zeitschlitzkapazität des Zeitschlitz-Subkanals durch die gruppeninterne ID der Zuhörer-Mobilstation;
Extrahieren eines Teilerrests des fünften Quotienten, um eine Seriennummer einer Position des AB zu erhalten, die der gruppeninternen ID der Zuhörer-Mobilstation in dem vergebenen Zeitschlitz-Subkanal in dem Mehrfachrahmen, der zu dem AB gehört, entspricht.

24. Verfahren nach Anspruch 13, ferner mit den folgenden Schritten:
Speichern einer zweiten Abbildungsbeziehung zwischen dem vergebenen Zeitschlitz-Subkanal für den Gruppenanruf/Multicast und dem Gruppenanruf/Multicast; und
Bestimmen der AB-Position als Reaktion auf das Empfangen des AB;
Bestimmen eines Zeitschlitz-Subkanals, der zu dem AB gehört, auf der Basis der AB-Position; und
Bestimmen des Gruppenanrufs/Multicast, der zu der Zuhörer-Mobilstation gehört, die dem AB entspricht, auf der Basis der zweiten Beziehung zwischen dem Zeitschlitz-Subkanal und dem Gruppenanruf/Multicast.

25. Verfahren nach Anspruch 4, 14 oder 16, wobei die Anzahl der Mobilstationen in dem Gruppenanrufmulticast durch eine maximale ID von Mobilstationen in dem Gruppenanruf/Multicast erhalten wird.

26. Verfahren nach Anspruch 8, 9, 10,20,21 oder 22, wobei das Parsen des AB, um die gruppeninterne ID der Zuhörer-Mobilstation, die in dem AB enthalten ist, zu erhalten, Folgendes umfasst:
Dividieren einer Maximalzahl, die durch einen Platz zum Speichern einer ID in dem AB identifiziert wird, durch die gruppeninterne ID der Mobilstation, um einen sechsten Quotienten zu erhalten; und
Extrahieren eines Teilerrests des sechsten Quotienten und Bestimmen des Teilerrests als die gruppeninterne ID der Mobilstation, die in dem AB enthalten ist.

27. Verfahren nach einem der Ansprüche 1 bis 24, wobei das öffentliche Netz ein Mobilkommunikationsnetz auf der Basis des Global System for Mobile Communications umfasst.

28. Verfahren nach Anspruch 27, wobei der dedizierte Steuerkanal einen selbständigen dedizierten Steuerkanal umfasst.

29. Bündelkommunikationssystem, **dadurch gekennzeichnet, dass** das Bündelkommunikationssystem Folgendes umfasst:
eine Netzseite, die dafür ausgelegt ist, einen dedizierten Steuerkanal in einer Mehrfachrahmensequenz für Zuhörer-Mobilstationen, die Informationen melden, zu designieren, einen in dem dedizierten Steuerkanal verfügbaren Subkanal für einen hergestellten Gruppenanruf/Multicast zu vergeben, Beschreibungsinformationen des vergebenen Subkanals zu den Mobilstationen in dem Gruppenanruf/Multicast zu senden und Informationen der Zuhörer-Mobilstation auf der Basis eines durch die Zuhörer-Mobilstation gemeldeten Access Burst AB zu erhalten;
mindestens eine Zuhörer-Mobilstation in dem Gruppenanruf/Multicast, die dafür ausgelegt ist, eine Position des Subkanals in dem dedizierten Steuerkanal gemäß den Beschreibungsinformationen des Subkanals zu bestimmen, eine AB-Position in dem Subkanal, die einer Zuhörer-Mobilstation entspricht, auf der Basis einer Abbildungsbeziehung zwischen den Zuhörer-Mobilstationen in dem Gruppenanruf/Multicast und AB-Positionen in dem Subkanal zu bestimmen und einen AB über die bestimmte AB-Position an die Netzseite zu melden.

30. Bündelkommunikationssystem nach Anspruch 29, wobei die Netzseite den Subkanal durch Nehmen eines Mehrfachrahmens in der Mehrfachrahmensequenz als eine grundlegende Rahmenressourceneinheit vergibt.

31. Bündelkommunikationssystem nach Anspruch 29, wobei die Netzseite den Subkanal durch Nehmen eines Zeitschlitzes in der Mehrfachrahmensequenz als eine grundlegende Einheit vergibt.

32. Bündelkommunikationssystem nach Anspruch 29, wobei das Bündelkommunikationssystem auf einem öffentlichen Netz basiert und das öffentliche Netz ein Mobilkommunikationsnetz auf der Basis des Global System for Mobile Communications ist.

33. Bündelkommunikationssystem nach Anspruch 30, wobei die Netzseite eine Mobilvermittlungsstelle, eine Basisstationssteuerung u n d ein Basissender-/- empfängersystem umfasst;
die Mobilvermittlungsstelle dafür ausgelegt ist, die Anzahl der Mobilstationen in dem Gruppenanruf/Multicast zu der Basisstationssteuerung zu senden;
die Basisstationssteuerung dafür ausgelegt ist, den Subkanal des Gruppenanrufs/Multicast auf der Basis einer maximalen Anzahl der Mobilstationen des Gruppenanrufs/Multicast zu bestimmen, die Beschreibungsinformationen des bestimmten Subkanals zu dem Basissender-/-empfängersystem zu senden; und die Basisstationssteuerung dafür ausgelegt ist zu verifizieren, ob eine erfolgreiche Aktivierung empfangen wird, und die Beschreibungsinformationen des Subkanals zu der Zuhörer-Mobilstation zu senden, wenn die erfolgreiche Aktivierung durch die Basisstationssteuerung empfangen wird; und
das Basissender-/-empfängersystem dafür ausgelegt ist, die Beschreibungsinformationen des Subkanals zu empfangen, zu verifizieren, ob der beschriebene Subkanal verfügbar ist, den vergebenen Subkanal zu aktivieren und eine Erfolgreiche-Aktivierung-Antwort an die Basisstationssteuerung zurückzugeben, wenn der beschriebene Subkanal verfügbar ist, und eine Fehlschlagende-Aktivierung-Antwort an die Basisstationssteuerung zurückzugeben, wenn der beschriebene Subkanal nicht verfügbar ist.

34. Bündelkommunikationssystem nach Anspruch 29, wobei die Netzseite eine Mobilvermittlungsstelle, eine Basisstationssteuerung und ein Basissender-/- empfängersystem umfasst; und
das Basissender-/-empfängersystem dafür ausgelegt ist, den AB zu empfangen und die Informationen der Zuhörer-Mobilstation auf der Basis des AB zu erhalten; und die Informationen der Zuhörer-Mobilstation über die Basisstationssteuerung zu der Mobilvermittlungsstelle zu senden;
und die Mobilvermittlungsstelle dafür ausgelegt ist, auf der Basis der Informationen der Zuhörer-Mobilstation Befehligung und Scheduling durchzuführen.

## Revendications

1. Procédé d'obtention d'informations de stations mobiles réceptrices dans un processus d'appel groupé/de multidiffusion dans un système de communication à ressources partagées basé sur un réseau public, **caractérisé en ce que** le procédé comprend :
la désignation d'un canal de commande dédié dans une séquence de multitrames pour la communication d'informations par les stations mobiles réceptrices ;
l'attribution d'un sous-canal dans le canal de commande dédié pour un appel groupé/une multidiffusion en réponse à l'établissement de l'appel groupé/la multidiffusion ;
l'envoi d'informations de description du sous-canal attribué aux stations mobiles dans l'appel groupé/la multidiffusion ;
la détermination d'une position du sous-canal dans le canal de commande dédié conformément aux informations de description du sous-canal ;
la détermination d'une position de salve d'accès AB ("Access Burst") dans le sous-canal correspondant à une station mobile réceptrice en fonction d'une relation de mappage entre les stations mobiles réceptrices dans l'appel groupé/la multidiffusion et les positions AB dans le sous-canal ;
la communication d'une AB à un côté réseau par l'intermédiaire de la position AB déterminée ; et
l'obtention d'informations de la station mobile réceptrice en fonction de l'AB communiquée.

2. Procédé selon la revendication 1, dans lequel l'attribution du sous-canal dans le canal de commande dédié pour l'appel groupé/la multidiffusion comprend :
l'attribution du sous-canal en utilisant une multitrame dans la séquence de multitrames comme unité de ressource de trame élémentaire, le sous-canal attribué étant défini comme un sous-canal de ressources de trames.

3. Procédé selon la revendication 2, dans lequel l'attribution du sous-canal de ressources de trames comprend :
la détermination du nombre des multitrames requises par l'appel groupé/la multidiffusion, le nombre des multitrames requises par l'appel groupé/la multidiffusion étant représenté par L ;
si la séquence de multitrames comporte L multitrames, l'attribution du canal de commande dédié désigné dans les L multitrames comme sous-canal de ressources de trames pour l'appel groupé/la multidiffusion.

4. Procédé selon la revendication 3, dans lequel la détermination du nombre de multitrames requises par l'appel groupé/la multidiffusion comprend :
l'obtention d'un nombre de stations mobiles dans l'appel groupé/la multidiffusion ;
la division du nombre d'AB occupées par le canal de commande dédié désigné dans une multitrame individuelle par le nombre de stations mobiles dans l'appel groupé/la multidiffusion afin d'obtenir un quotient ;
l'arrondi du quotient obtenu afin d'obtenir une valeur comme nombre des multitrames requises par l'appel groupé/la multidiffusion.

5. Procédé selon la revendication 2, dans lequel la communication de l'AB au côté réseau comprend l'utilisation d'une séquence de la séquence de multitrames occupée par le sous-canal comme période.

6. Procédé selon la revendication 2, dans lequel la relation de mappage entre les stations mobiles réceptrices dans l'appel groupé/la multidiffusion et les positions AB dans le sous-canal de ressources de trames comprend : une relation de mappage d'ID intra-groupe des stations mobiles réceptrices correspondant aux positions AB dans le sous-canal de ressources de trames dans l'ordre.

7. Procédé selon la revendication 6, dans lequel les informations de la station mobile réceptrice indiquent si la station mobile réceptrice est en position ou non ; et l'obtention des informations de la station mobile réceptrice en fonction de l'AB comprend :
la détermination d'une position AB ;
la détermination de l'ID intra-groupe de la station mobile réceptrice correspondant à la position AB en fonction de la relation de mappage entre les ID intra-groupe des stations mobiles réceptrices et les positions AB dans le sous-canal de ressources de trames ;
si l'ID intra-groupe est valable, la détermination que la station mobile réceptrice correspondant à l'ID intra-groupe est en position.

8. Procédé selon la revendication 6, dans lequel l'AB contient l'ID intra-groupe de la station mobile réceptrice ;
l'obtention des informations de la station mobile réceptrice en fonction de l'AB comprend :
l'analyse syntaxique de l'AB afin d'obtenir l'ID intra-groupe de la station mobile réceptrice contenue dans l'AB ;
la détermination de la station mobile réceptrice correspondant à l'ID intra-groupe en position.

9. Procédé selon la revendication 8, dans lequel la détermination que la station mobile réceptrice correspondant à l'ID intra-groupe est en position comprend :
la vérification si la position AB correspond ou non à l'ID intra-groupe de la station mobile réceptrice portée dans l'AB conformément à la relation de mappage entre les ID intra-groupe des stations mobiles réceptrices et les positions AB dans le sous-canal de ressources de trames ; et
la détermination de la station mobile réceptrice correspondant à l'ID intra-groupe en position en réponse à la vérification que la position AB correspond à l'ID intra-groupe de la station mobile réceptrice.

10. Procédé selon la revendication 9, dans lequel l'AB communiquée contient en outre un type d'accès de la station mobile réceptrice ;
le procédé comprend en outre avant la vérification si la position AB correspond ou non à l'ID intra-groupe de la station mobile réceptrice portée dans l'AB :
la détermination que le type d'accès est valable.

11. Procédé selon la revendication 6, dans lequel la détermination de la position AB correspondant à la station mobile réceptrice dans le sous-canal de ressources de trames comprend :
la division du nombre d'AB occupées par le canal de commande dédié désigné dans une multitrame individuelle par l'ID intra-groupe de la station mobile réceptrice et l'obtention d'un premier quotient ;
l'arrondi du premier quotient et l'ajout d'un numéro de série d'une multitrame de début du sous-canal de ressources de trames dans la séquence de multitrames au premier quotient pour obtenir le numéro de série d'une multitrame appartenant à l'AB et correspondant à l'ID intra-groupe de la station mobile réceptrice dans la séquence de multitrames ;
la division du nombre d'AB occupées par le canal de commande dédié désigné dans une multitrame par l'ID intra-groupe de la station mobile réceptrice afin d'obtenir un second quotient ;
l'extraction d'un mode du second quotient, obtenant un numéro de série d'une position de l'AB correspondant à l'ID intra-groupe de la station mobile réceptrice dans le sous-canal de ressources de trames dans la multitrame appartenant à l'AB.

12. Procédé selon la revendication 2, comprenant en outre :
la mémorisation d'une première relation entre le sous-canal de ressources de trames attribué pour l'appel groupé/la multidiffusion et l'appel groupé/la multidiffusion ;
la détermination d'une position de l'AB et du sous-canal de ressources de trames appartenant à l'AB en fonction de la position de l'AB ; et
la détermination de l'appel groupé/la multidiffusion appartenant à la station mobile réceptrice et correspondant à l'AB, en fonction de la première relation entre le sous-canal de ressources de trames et l'appel groupé/la multidiffusion.

13. Procédé selon la revendication 1, dans lequel l'attribution du sous-canal dans le canal de commande dédié pour l'appel groupé/la multidiffusion comprend :
l'attribution du sous-canal en utilisant une tranche de temps dans la séquence de multitrames comme unité de base,
dans lequel le sous-canal est défini comme un sous-canal de tranches de temps.

14. Procédé selon la revendication 13, dans lequel l'attribution du sous-canal de tranches de temps comprend :
la détermination d'une capacité de tranches de temps du sous-canal de tranches de temps dans chaque multitrame requise par l'appel groupé/la multidiffusion, en fonction du nombre de stations mobiles dans l'appel groupé/la multidiffusion ;
la division de la capacité de tranches de temps du sous-canal de tranches de temps par le nombre de stations mobiles dans l'appel groupé/la multidiffusion afin d'obtenir un troisième quotient ;
l'arrondi du troisième quotient afin d'obtenir le nombre de multitrames occupées par le sous-canal de tranches de temps ;
l'attribution des tranches de temps inactives dans le canal de commande dédié désigné dans chaque multitrame occupée, le nombre de tranches de temps inactives attribuées étant égal au nombre de la capacité de tranches de temps ;
la détermination de positions des tranches de temps inactives dans le canal de commande dédié ; et
l'utilisation des tranches de temps inactives comme sous-canal de tranches de temps attribué.

15. Procédé selon la revendication 14, dans lequel les informations de description du sous-canal de tranches de temps comprennent :
le nombre de multitrames occupées par le sous-canal de tranches de temps attribué ;
la capacité de tranches de temps du sous-canal de tranches de temps ; et
une position du sous-canal de tranches de temps dans le canal de commande dédié.

16. Procédé selon la revendication 14, dans lequel les informations de description du sous-canal de tranches de temps comprennent :
le nombre de stations mobiles dans l'appel groupé/la multidiffusion ;
la capacité de tranches de temps du sous-canal de tranches de temps attribué ; et
la position du sous-canal de tranches de temps dans le canal de commande dédié ;
le procédé comprend en outre après l'envoi des informations de description du sous-canal aux stations mobiles dans l'appel groupé/la multidiffusion :
la division de la capacité de tranches de temps du sous-canal de tranches de temps par le nombre de stations mobiles dans l'appel groupé/la multidiffusion afin d'obtenir un quatrième quotient ;
l'arrondi du quatrième quotient afin d'obtenir le nombre de multitrames occupées par le sous-canal de tranches de temps.

17. Procédé selon la revendication 13, dans lequel la communication de l'AB comprend l'utilisation du nombre de multitrames occupées par le sous-canal de tranches de temps attribué comme période.

18. Procédé selon la revendication 13, dans lequel la relation de mappage entre les stations mobiles réceptrices et les positions AB dans le sous-canal de tranches de temps comprend :
une relation de mappage des ID intra-groupe des stations mobiles réceptrices correspondant aux positions AB dans le sous-canal de tranches de temps dans l'ordre.

19. Procédé selon la revendication 18, dans lequel les informations de la station mobile réceptrice comportent des informations qui indiquent si la station mobile réceptrice est en position ou non ;
l'obtention des informations de la station mobile réceptrice en fonction de l'AB comprend :
la détermination d'une position AB ;
la détermination de l'ID intra-groupe de la station mobile réceptrice correspondant à la position AB en fonction de la relation de mappage entre les ID intra-groupe des stations mobiles réceptrices et les positions AB dans le sous-canal de tranches de temps ;
si l'ID intra-groupe est valable, la détermination que la station mobile réceptrice correspondant à l'ID intra-groupe est en position.

20. Procédé selon la revendication 18, dans lequel l'AB communiquée contient l'ID intra-groupe de la station mobile réceptrice ;
l'obtention des informations de la station mobile réceptrice en fonction de l'AB comprend :
l'analyse syntaxique de l'AB afin d'obtenir l'ID intra-groupe de la station mobile réceptrice contenue dans l'AB ;
la détermination que la station mobile réceptrice correspondant à l'ID intra-groupe obtenue est en position.

21. Procédé selon la revendication 20, dans lequel la détermination que la station mobile réceptrice correspondant à l'ID intra-groupe obtenue est en position comprend :
la vérification si la position AB correspond ou non à l'ID intra-groupe de la station mobile réceptrice contenue dans l'AB, en fonction de la relation de mappage entre les ID intra-groupe des stations mobiles réceptrices et les positions AB dans le sous-canal de tranches de temps ; et
la détermination que la station mobile réceptrice est en position en réponse à la vérification que la position AB correspond à l'ID intra-groupe de la station mobile réceptrice.

22. Procédé selon la revendication 21, dans lequel l'AB communiquée contient en outre un type d'accès de la station mobile réceptrice ;
le procédé comprend en outre avant la vérification si la position AB correspond ou non à l'ID intra-groupe de la station mobile réceptrice contenue dans l'AB :
la détermination que le type d'accès de la station mobile réceptrice est valable.

23. Procédé selon la revendication 18, dans lequel la détermination de la position AB correspondant à la station mobile réceptrice dans le sous-canal de tranches de temps comprend :
la division de la capacité de tranches de temps du sous-canal de tranches de temps par l'ID intra-groupe de la station mobile réceptrice afin d'obtenir un cinquième quotient ;
l'arrondi du cinquième quotient et la soustraction de un du cinquième quotient afin d'obtenir un numéro de série d'une multitrame appartenant à l'AB correspondant à l'ID intra-groupe de la station mobile réceptrice dans les multitrames occupées par le sous-canal de tranches de temps ;
la division de la capacité de tranches de temps du sous-canal de tranches de temps par l'ID intra-groupe de la station mobile réceptrice ;
l'extraction d'un mode du cinquième quotient afin d'obtenir un numéro de série d'une position de l'AB correspondant à l'ID intra-groupe de la station mobile réceptrice dans le sous-canal de tranches de temps attribué dans la multitrame appartenant à l'AB.

24. Procédé selon la revendication 13, comprenant en outre :
la mémorisation d'une seconde relation de mappage entre le sous-canal de tranches de temps attribué pour l'appel groupé/la multidiffusion et l'appel groupé/la multidiffusion ; et
la détermination de la position AB en réponse à la réception de l'AB ;
la détermination d'un canal de tranches de temps appartenant à l'AB en fonction de la position AB ; et
la détermination de l'appel groupé/la multidiffusion appartenant à la station mobile réceptrice correspondant à l'AB en fonction de la seconde relation entre le sous-canal de tranches de temps et l'appel groupé/la multidiffusion.

25. Procédé selon la revendication 4, 14 ou 16, dans lequel le nombre des stations mobiles dans l'appel groupé/la multidiffusion est obtenu par une ID maximale des stations mobiles dans l'appel groupé/la multidiffusion.

26. Procédé selon la revendication 8, 9, 10, 20, 21 ou 22, dans lequel l'analyse syntaxique de l'AB pour obtenir l'ID intra-groupe de la station mobile réceptrice contenue dans l'AB comprend :
la division d'un nombre maximum identifié par un espace pour mémoriser une ID dans l'AB par l'ID intra-groupe de la station mobile afin d'obtenir un sixième quotient ; et
l'extraction d'un mode du sixième quotient et la détermination du mode comme ID intra-groupe de la station mobile contenue dans l'AB.

27. Procédé selon l'une quelconque des revendications 1 à 24, dans lequel le réseau public comprend un réseau de communications mobiles basé sur le système GSM (système global de communications mobiles).

28. Procédé selon la revendication 27, dans lequel le canal de commande dédié comprend un canal de commande dédié autonome.

29. Système de communication à ressources partagées, **caractérisé en ce qu'**il comprend :
un côté réseau, adapté pour désigner un canal de commande dédié dans une séquence de multitrames pour la communication d'informations par les stations mobiles réceptrices, attribuer un sous-canal disponible dans le canal de commande dédié pour un appel groupé/une multidiffusion établi(e), envoyer des informations de description du sous-canal attribué aux stations mobiles dans l'appel groupé/la multidiffusion, et obtenir des informations de la station mobile réceptrice en fonction d'une salve d'accès AB communiquée par la station mobile réceptrice ;
au moins une station mobile réceptrice dans l'appel groupé/la multidiffusion, adaptée pour déterminer une position du sous-canal dans le canal de commande dédié conformément aux informations de description du sous-canal, déterminer une position AB dans le sous-canal correspondant à une station mobile réceptrice en fonction d'une relation de mappage entre les stations mobiles réceptrices dans l'appel groupé/la multidiffusion et les positions AB dans le sous-canal, et communiquer une AB au côté réseau par l'intermédiaire de la position AB déterminée.

30. Système de communications à ressources partagées selon la revendication 29, dans lequel le côté réseau attribue le sous-canal en utilisant une multitrame dans la séquence de multitrames comme unité de ressource de trame élémentaire.

31. Système de communications à ressources partagées selon la revendication 29, dans lequel le côté réseau attribue le sous-canal en utilisant une tranche de temps dans la séquence de multitrames comme unité de base.

32. Système de communications à ressources partagées selon la revendication 29, le système de communications à ressources partagées étant basé sur un réseau public, et le réseau public étant un réseau de communications mobiles basé sur le système GSM (Global System for Mobile communications).

33. Système de communications à ressources partagées selon la revendication 30, dans lequel le côté réseau comprend un Centre de Commutation de Services Mobiles, une unité de commande de station de base et un système émetteur-récepteur de base ;
le Centre de Commutation de Services Mobiles est configuré pour envoyer le nombre de stations mobiles dans l'appel groupé/la multidiffusion à l'unité de commande de station de base ;
l'unité de commande de station de base est configurée pour déterminer le sous-canal de l'appel groupé/la multidiffusion en fonction d'un nombre maximal des stations mobiles de l'appel groupé/la multidiffusion, envoyer les informations de description du sous-canal déterminé au système émetteur-récepteur de base ; et l'unité de commande de station de base est configurée pour vérifier si une activation réussie est reçue ou non, envoyer les informations de description du sous-canal à la station mobile réceptrice si l'activation réussie est reçue par l'unité de commande de station de base ;
le système émetteur-récepteur de base est configuré pour recevoir les informations de description du sous-canal, vérifier si le sous-canal décrit est disponible ou non, activer le sous-canal attribué et renvoyer une réponse d'activation réussie à l'unité de commande de station de base si le sous-canal décrit est disponible, et renvoyer une réponse d'activation incorrecte à l'unité de commande de station de base si le sous-canal décrit n'est pas disponible.

34. Système de communications à ressources partagées selon la revendication 29, dans lequel le côté réseau comprend un Centre de Commutation de Services Mobiles, une unité de commande de station de base et un système émetteur-récepteur de base ; et le système émetteur-récepteur de base est configuré pour recevoir l'AB et obtenir les informations de la station mobile réceptrice en fonction de l'AB ; et envoyer les informations de la station mobile réceptrice au Centre de Commutation de Services Mobiles par l'intermédiaire de l'unité de commande de station de base ;
et le Centre de Commutation de Services Mobiles est configuré pour effectuer une commande et un ordonnancement en fonction des informations de la station mobile réceptrice.
